(19) Europäisches Patentamt
European Patent Office
Office européen des brevets

(11) **EP 3 349 283 B1**

(12) **EUROPEAN PATENT SPECIFICATION**

(45) Date of publication and mention
of the grant of the patent:
**13.03.2019 Bulletin 2019/11**

(21) Application number: **15903641.7**

(22) Date of filing: **11.09.2015**

(51) Int Cl.:
*H01M 8/04* (2016.01)  *H01M 8/04089* (2016.01)
*H01M 8/04492* (2016.01)  *H01M 8/04746* (2016.01)
*H01M 8/04701* (2016.01)

(86) International application number:
**PCT/JP2015/075918**

(87) International publication number:
**WO 2017/042979 (16.03.2017 Gazette 2017/11)**

(54) **FUEL CELL SYSTEM CONTROL DEVICE AND FUEL CELL SYSTEM CONTROL METHOD**

BRENNSTOFFZELLENSYSTEMSTEUERUNGSVORRICHTUNG UND
BRENNSTOFFZELLENSYSTEMSTEUERUNGSVERFAHREN

DISPOSITIF DE COMMANDE DE SYSTÈME DE PILE À COMBUSTIBLE ET PROCÉDÉ DE
COMMANDE DE SYSTÈME DE PILE À COMBUSTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.07.2018 Bulletin 2018/29**

(73) Proprietor: **Nissan Motor Co., Ltd.
Yokohama-shi, Kanagawa 221-0023 (JP)**

(72) Inventors:
• **AOKI, Tetsuya
Atsugi-shi
Kanagawa 243-0123 (JP)**
• **IKEDA, Nobuhisa
Atsugi-shi
Kanagawa 243-0123 (JP)**
• **KOTAKA, Toshikazu
Atsugi-shi
Kanagawa 243-0123 (JP)**
• **IWASAKI, Daigo
Atsugi-shi
Kanagawa 243-0123 (JP)**

(74) Representative: **Grünecker Patent- und
Rechtsanwälte
PartG mbB
Leopoldstraße 4
80802 München (DE)**

(56) References cited:
JP-A- 2007 123 029    JP-A- 2010 251 096
JP-A- 2010 251 096    US-A1- 2006 263 653
US-A1- 2011 200 896   US-A1- 2011 311 889

EP 3 349 283 B1

**Description**

TECHNICAL FIELD

The present invention relates to a control device and a control method for a fuel cell system for controlling a wet/dry state of an electrolyte membrane of a fuel cell by controlling a plurality of physical quantities.

BACKGROUND ART

An anode-gas non-circulation type fuel cell system for discharging anode off-gas after reaction together with cathode off-gas without circulating anode gas, which is fuel gas, and an anode gas circulation-type fuel cell system for circulating anode off-gas and additionally supplying anode gas from a high-pressure tank if necessary have been proposed as fuel cell systems.

In a fuel cell system, water and steam (hereinafter, referred to as "moisture") generated by an electrode reaction in a cathode electrode flows into an anode gas flow passage on an anode electrode side due to cross leakage. Since a wet/dry state (degree of wetness) of an electrolyte membrane in a fuel cell can be controlled utilizing this moisture in the anode gas circulation type fuel cell system, humidifiers need not be provided in an anode gas supply passage and an anode gas circulation passage.

JP5104950B discloses an anode gas circulation-type fuel cell system for measuring a resistance value of an entire fuel cell, determining the excess or deficiency of a moisture amount near an entrance and an exit of an oxidant gas flow passage of the fuel cell and adjusting stoichiometric ratios (flow rates) and pressures of fuel gas and the oxidant gas if the moisture amount is determined to be excessive or deficient.

In the fuel cell system as described above, if the resistance value of the entire fuel cell is larger than a predetermined value, the moisture amount is determined to be deficient and, for example, a control is executed to increase the stoichiometric ratio of the fuel gas and reduce a supply pressure of the fuel gas. In this way, the fuel gas reacts with the oxidant gas to generate water and a volumetric flow rate of the anode gas circulation passage can be increased. Thus, the amount of moisture that can be retained on the anode gas circulation passage side can be increased.

On the other hand, if the resistance value of the entire fuel cell is smaller than the predetermined value, the moisture amount is determined to be excessive and, for example, a control is executed to reduce the stoichiometric ratio of the fuel gas and increase the supply pressure of the fuel gas. In this way, the generation of water can be reduced by suppressing the reaction of the fuel gas and the oxidant gas and the volumetric flow rate of the anode gas circulation passage can be reduced. Thus, the amount of moisture that can be retained on the anode gas circulation passage side can be reduced by increasing the amount of moisture discharged to the outside of the fuel cell by being included in the oxidant gas.

In the case of executing the control as described above, when the stoichiometric ratio of the fuel gas is increased, an anode circulation pump provided in the anode gas circulation passage is started or the number of revolutions of the anode circulation pump is increased and, if necessary, an anode pressure control value provided downstream of a hydrogen tank is opened to supply the fuel gas. Further, when the stoichiometric ratio of the fuel gas is reduced, the number of revolutions of the anode circulation pump provided in the anode gas circulation passage is reduced and, if necessary, a purge valve provided in the anode gas circulation passage is opened to discharge anode off-gas.

SUMMARY OF INVENTION

However, in such a case, a manipulation opposite to an originally desired control may be transiently performed. Specifically, if the number of revolutions of the anode circulation pump is increased to increase the moisture amount in the fuel cell, the amount of the anode off-gas carried out from the fuel cell transiently increases from a moment of increasing the number of revolutions of the anode circulation pump and the moisture amount in the fuel cell is reduced by as much as water or steam included in the anode off-gas. Further, if the number of revolutions of the anode circulation pump is reduced to reduce the moisture amount in the fuel cell, the amount of the anode off-gas flowing into the fuel cell transiently increases more than the anode off-gas discharged from the fuel cell from a moment of reducing the number of revolutions of the anode circulation pump and the moisture amount in the fuel cell is increased by as much as water or steam included in the anode off-gas.

In such transient situations, not only a moisture amount control of the fuel cell is delayed, but also there are problems such as a possibility of breaking or degrading the electrolyte membrane in the fuel cell and a possibility of hydrogen (anode gas) deficiency in the fuel cell due to clogging near the exit of the anode gas flow passage by generated water.

The present invention was developed, focusing on such problems, and aims to provide a fuel cell system capable of reducing the influence of an effect opposite to that in a control direction in a transient state of controlling a moisture amount in a fuel cell and a control method for fuel cell system.

According to an aspect of the present invention, a fuel cell system includes a control device for the fuel cell system for generating power by supplying anode gas and cathode gas to a fuel cell. The fuel cell system is an anode gas circulation-type fuel cell system provided with: an anode gas circulation passage for supplying anode off-gas discharged from the fuel cell and the anode gas, which is to be supplied to the fuel cell, to the fuel cell by mixing the anode off-gas and the anode gas, a wet/dry state detecting unit configured to detect a wet/dry state of an electrolyte membrane of the fuel cell; and, a wet/dry state control unit configured to control the wet/dry state of the electrolyte membrane by manipulating (controlling actuators) a plurality of physical quantities including a circulation flow rate of the anode gas flowing in the anode gas circulation passage. Further, the control device includes an anode gas circulation flow rate control unit configured to control the anode gas circulation flow rate on the basis of the wet/dry state of the electrolyte membrane detected by the wet/dry state detecting unit, and a priority setting unit configured to set priority levels of a normal manipulation to the plurality of physical quantities to be manipulated by the wet/dry state control unit. In this aspect, the anode gas circulation flow rate control unit includes an anode gas circulation flow rate limiting unit configured to limit a change rate per unit time of the anode gas circulation flow rate during a transient operation for changing the wet/dry state of the electrolyte membrane, and a control quantity compensating unit configured to, if the change rate of the anode gas circulation flow rate is limited by the anode gas circulation flow rate limiting unit, compensate an insufficiency in a control quantity of the wet/dry state due to the limitation of the anode gas circulation flow rate, the compensation being carried out by manipulating a physical quantity with a lower priority level of the normal manipulation than a priority level of the normal manipulation of the anode gas circulation flow rate set by the priority setting unit.

BRIEF DESCRIPTION OF DRAWINGS

FIG. 1 is a diagram showing an example of an entire configuration of a fuel cell system in one embodiment of the present invention,
FIG. 2 is a diagram showing the configuration of a fuel cell included in a fuel cell stack shown in FIG. 1,
FIG. 3 is a circuit diagram of an impedance measuring device for measuring an internal impedance of the fuel cell stack shown in FIG. 1,
FIG. 4 is a block diagram showing an example of a functional configuration of a controller for controlling the fuel cell system in the present embodiment,
FIGS. 5 are charts showing an example of a method for limiting change rates of an anode gas circulation flow rate limiting unit and a cooling water temperature limiting unit shown in FIG. 4,
FIGS. 6 are charts showing an example of the method for limiting the change rates of the anode gas circulation flow rate limiting unit and the cooling water temperature limiting unit shown in FIG. 4,
FIG. 7 is a diagram showing an example of a functional configuration of a control quantity compensating unit shown in FIG. 4 in a dry operation,
FIGS. 8 are time charts showing a state change of each physical quantity during a dry operation in a conventional fuel cell system,
FIGS. 9 are time charts showing a state change of each physical quantity during the dry operation when a change rate of an anode gas circulation flow rate was limited,
FIGS. 10 are time charts showing a state change of each physical quantity during the dry operation when change rates of the anode gas circulation flow rate and a cooling water temperature were limited,
FIG. 11 is a diagram showing an example of a functional configuration of the control quantity compensating unit shown in FIG. 4 in a wet operation,
FIGS. 12 are time charts showing a state change of each physical quantity during a wet operation in the conventional fuel cell system,
FIGS. 13 are time charts showing a state change of each physical quantity during the wet operation when the change rate of the anode gas circulation flow rate was limited,
FIG. 14 is a flow chart showing an example of a control quantity compensating process performed by the controller in the present embodiment,
FIG. 15 is a flow chart showing an example of a system operating state detecting process, which is a subroutine of the control quantity compensating process,
FIG. 16 is a flow chart showing an example of a target water balance calculating process, which is a subroutine of the control quantity compensating process,
FIG. 17 is a flow chart showing an example of a dry operation control quantity calculating process, which is a subroutine of the control quantity compensating process,
FIG. 18 is a flow chart showing an example of a target cathode gas pressure calculating process (dry), which is a subroutine of the dry operation control quantity calculating process,

FIG. 19 is a flow chart showing an example of a target anode gas circulation flow rate calculating process (dry), which is a subroutine of the dry operation control quantity calculating process,

FIG. 20 is a flow chart showing an example of a target cooling water temperature calculating process (dry), which is a subroutine of the dry operation control quantity calculating process,

FIG. 21 is a flow chart showing an example of a target cathode gas flow rate calculating process (dry), which is a subroutine of the dry operation control quantity calculating process,

FIG. 22 is a flow chart showing an example of a wet operation control quantity calculating process, which is a subroutine of the control quantity compensating process,

FIG. 23 is a flow chart showing an example of a target cathode gas flow rate calculating process (wet), which is a subroutine of the wet operation control quantity calculating process,

FIG. 24 is a flow chart showing an example of a target cooling water temperature calculating process (wet), which is a subroutine of the wet operation control quantity calculating process,

FIG. 25 is a flow chart showing an example of a target anode gas circulation flow rate calculating process (wet), which is a subroutine of the wet operation control quantity calculating process, and

FIG. 26 is a flow chart showing an example of a target cathode gas pressure calculating process (wet), which is a subroutine of the wet operation control quantity calculating process.

DESCRIPTION OF EMBODIMENTS

Hereinafter, an embodiment of the present invention is described with reference to the accompanying drawings.

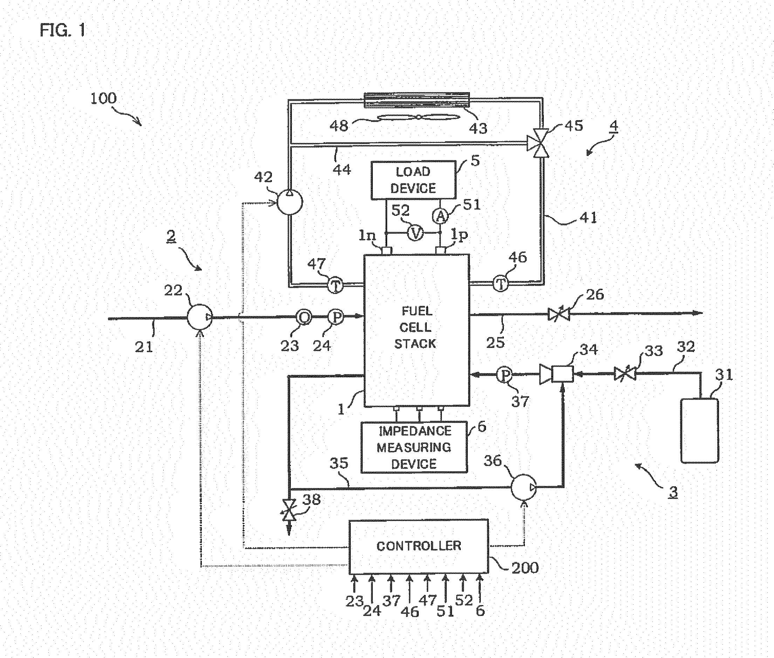

FIG. 1 is a diagram showing an example of an entire configuration of a fuel cell system 100 in one embodiment of the present invention. A fuel cell (fuel cell stack) of the fuel cell system 100 of the present embodiment is used as one drive source in an unillustrated electric vehicle with a high-voltage battery and a drive motor.

The fuel cell system 100 constitutes a power supply system for causing a fuel cell stack 1 to generate power according to an electrical load by supplying anode gas (hydrogen) and cathode gas (air) necessary for power generation to the fuel cell stack 1. The fuel cell system 100 of the present embodiment and a control device therefor are specialized in a control in a transient state during an anode gas circulation control to be described later. Thus, in the following description, a control in transient time is particularly described and the description of normal controls and known controls is omitted as appropriate.

As shown in FIG. 1, the fuel cell system 100 includes the fuel cell stack 1, a cathode gas supplying/discharging device 2, an anode gas supplying/discharging device 3, a stack cooling device 4, a load device 5, an impedance measuring device 6 and a controller 200.

The fuel cell stack 1 is a laminated battery in which several hundreds of fuel cells are laminated since power required from a drive motor serving as the load drive 5 is large. The fuel cell stack 1 is connected to the load device 5 and supplies power to the load device 5. The fuel cell stack 1 generates, for example, a direct-current voltage of several hundreds of V (volts).

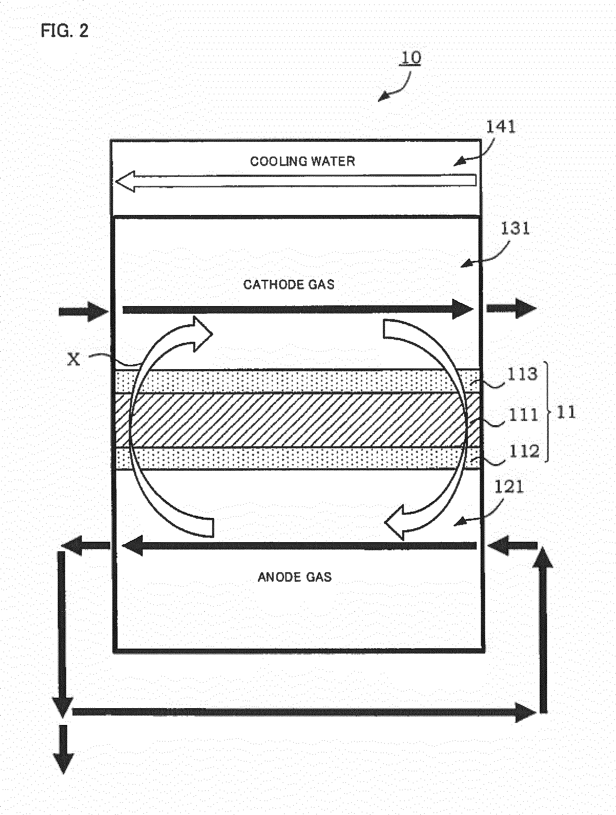

FIG. 2 is a diagram showing the configuration of a fuel cell 10 included in the fuel cell stack 1 shown in FIG. 1. The fuel cells 10 are laminated in a direction from the front to the back of the plane of FIG. 2 in the fuel cell stack 1.

As shown in FIG. 2, the fuel cell 10 is divided into an anode gas flow passage 121 and a cathode gas flow passage 131 by a membrane electrode assembly (MEA) 11. It should be noted that, although not shown, an anode separator is arranged to form the anode gas flow passage 121, and a cathode separator is arranged to form the cathode gas flow passage 131 and a cooling water flow passage 141.

The MEA 11 is composed of an electrolyte membrane 111, an anode electrode 112 and a cathode electrode 113. The MEA 11 includes the anode electrode 112 on one surface side of the electrolyte membrane 111 and the cathode electrode 113 on the other surface side.

The electrolyte membrane 111 is a proton conductive ion exchange membrane formed of fluororesin. The electrolyte membrane 111 exhibits good electrical conductivity with a suitable degree of wetness. The degree of wetness of the electrolyte membrane 111 mentioned here is equivalent to the amount of moisture (water content) included in the electrolyte membrane 111.

The anode electrode 112 is configured by laminating a catalyst layer and a gas diffusion layer although not shown. The catalyst layer is provided in contact with the electrolyte membrane 111 and formed of platinum or carbon black particles carrying platinum or the like. The gas diffusion layer is provided on an outer side of the catalyst layer to be held in contact with the catalyst layer and the anode separator, and formed of carbon cloth having gas diffusion property and electrical conductivity.

Although not shown, the cathode electrode 113 is configured by laminating a catalyst layer and a gas diffusion layer similarly to the anode electrode 112.

The anode gas flow passage 121 is formed as a plurality of groove-like passages in the anode separator. The anode gas flow passage 121 constitutes a fuel flow passage for supplying the anode gas to the anode electrode 112.

The cathode gas flow passage 131 is formed as a plurality of groove-like passages in the cathode separator. The cathode gas flow passage 131 constitutes an oxidant flow passage for supplying the cathode gas to the cathode electrode 113.

The cooling water flow passage 141 is formed as a plurality of groove-like passages in the cathode separator, adjacent to the cathode gas flow passage 131. The cooling water flow passage 141 constitutes a refrigerant flow passage for allowing the passage of a refrigerant for cooling the fuel cell 10 increased in temperature due to an electrochemical reaction of the anode gas and the cathode gas. In the present embodiment, cooling water is used as the refrigerant.

As shown in FIG. 2, the cathode separator is configured such that a flowing direction of the cooling water flowing in the cooling water flow passage 141 and a flowing direction of the cathode gas flowing in the cathode gas flow passage 131 are opposite to each other. It should be noted that these flowing directions may be the same. Further, these flowing directions may be at a predetermined angle to each other.

Further, the anode separator and the cathode separator are configured such that a flowing direction of the anode gas flowing in the anode gas flow passage 121 and the flowing direction of the cathode gas flowing in the cathode gas flow passage 131 are opposite to each other. It should be noted that these flowing directions may be at a predetermined angle to each other.

By configuring the MEA 11 as described above, the anode gas leaks from the anode gas flow passage 121 to the cathode gas flow passage 131 as indicated by an arrow X of FIG. 2 and nitrogen gas in the cathode gas and steam (moisture) generated by the electrochemical reaction leak from the cathode gas flow passage 131 to the anode gas flow passage 121.

Referring back to FIG. 1, the cathode gas supplying/discharging device 2 supplies the cathode gas (oxidant gas) to the fuel cell stack 1 and discharges cathode off-gas discharged from the fuel cell stack 1 to atmosphere. Specifically, the cathode gas supplying/discharging device 2 constitutes oxidant supply means for supplying oxidant (air) to the electrolyte membranes 111 of the fuel cells 10.

As shown in FIG. 1, the cathode gas supplying/discharging device 2 includes a cathode gas supply passage 21, a compressor 22, a flow rate sensor 23, a pressure sensor 24, a cathode gas discharge passage 25 and a cathode pressure control valve 26.

The cathode gas supply passage 21 is a passage for supplying the cathode gas to the fuel cell stack 1. One end of the cathode gas supply passage 21 is open and the other end is connected to a cathode gas inlet hole of the fuel cell stack 1.

The compressor 22 is provided in the cathode gas supply passage 21. The compressor 22 takes in air including oxygen through the open end of the cathode gas supply passage 21 and supplies that air as the cathode gas to the fuel cell stack 1. Rotation speed data of the compressor 22 is controlled by the controller 200.

The flow rate sensor 23 is provided between the compressor 22 and the fuel cell stack 1 in the cathode gas supply passage 21. The flow rate sensor 23 detects a flow rate of the cathode gas to be supplied to the fuel cell stack 1. The flow rate of the cathode gas to be supplied to the fuel cell stack 1 is merely referred to as a "cathode gas flow rate" below. Cathode gas flow rate data detected by this flow rate sensor 23 is output to the controller 200. The cathode gas flow rate detected in this way is utilized in a control quantity compensating process to be described later.

The pressure sensor 24 is provided between the compressor 22 and the fuel cell stack 1 in the cathode gas supply passage 21. The pressure sensor 24 detects a pressure of the cathode gas to be supplied to the fuel cell stack 1. The pressure of the cathode gas to be supplied to the fuel cell stack 1 is merely referred to as a "cathode gas pressure" below. Cathode gas pressure data detected by this pressure sensor 24 is output to the controller 200. The cathode gas pressure detected in this way is utilized in the control quantity compensating process to be described later.

The cathode gas discharge passage 25 is a passage for discharging cathode off-gas discharged from the fuel cell stack 1. One end of the cathode gas discharge passage 22 is connected to a cathode gas outlet hole of the fuel cell stack 1 and the other end is open.

The cathode pressure control valve 26 is provided in the cathode gas discharge passage 25. An electromagnetic valve capable of changing an opening degree of the valve in a stepwise manner is, for example, used as the cathode pressure control valve 26. The cathode pressure control valve 26 is controlled to be open and closed by the controller 200. By this open/close control, the cathode gas pressure is adjusted to a desired pressure. As the opening degree of the cathode pressure control valve 26 becomes larger, the cathode pressure control valve 26 is opened more and a discharge amount of the cathode off-gas increases. On the other hand, as the opening degree of the cathode pressure control valve 26 becomes smaller, the cathode pressure control valve 26 is closed more and the discharge amount of the cathode off-gas decreases.

The anode gas supplying/discharging device 3 is a device for supplying the anode gas (fuel gas) to the fuel cell stack 1 and circulating anode off-gas discharged from the fuel cell stack 1 to the fuel cell stack 1. Specifically, the anode gas supplying/discharging device 3 constitutes fuel supply means for supplying fuel (hydrogen) to the electrolyte membranes 111 of the fuel cells 10.

As shown in FIG. 1, the anode gas supplying/discharging device 3 includes a high-pressure tank 31, an anode gas supply passage 32, an anode pressure control valve 33, an ejector 34, an anode gas circulation passage 35, an anode circulation pump 36, a pressure sensor 37 and a purge valve 38.

The high-pressure tank 31 stores the anode gas to be supplied to the fuel cell stack 1 in a high-pressure state.

The anode gas supply passage 32 is a passage for supplying the anode gas stored in the high-pressure tank 31 to the fuel cell stack 1. One end of the anode gas supply passage 32 is connected to the high-pressure tank 31 and the other end is connected to an anode gas inlet hole of the fuel cell stack 1.

The anode pressure control valve 33 is provided between the high-pressure tank 31 and the ejector 34 in the anode gas supply passage 32. An electromagnetic valve capable of changing an opening degree of the valve in a stepwise manner is, for example, used as the anode pressure control valve 33. The anode pressure control valve 33 is controlled to be open and closed by the controller 200. By this open/close control, a pressure of the anode gas to be supplied to the fuel cell stack 1 is adjusted.

The ejector 34 is provided between the anode pressure control valve 33 and the fuel cell stack 1 in the anode gas supply passage 32. The ejector 34 is a mechanical pump provided in a part of the anode gas supply passage 32 where the anode gas circulation passage 35 joins. By providing the ejector 34 in the anode gas supply passage 32, the anode off-gas can be circulated to the fuel cell stack 1 by a simple configuration.

The ejector 34 sucks the anode off-gas from the fuel cell stack 1 by accelerating a flow velocity of the anode gas supplied from the anode pressure control valve 33 to generate a negative pressure. The ejector 34 discharges the sucked anode off-gas to the fuel cell stack 1 together with the anode gas supplied from the anode pressure control valve 33.

Although not specifically shown, the ejector 34 is composed of a conical nozzle having an opening narrowed from the anode pressure control valve 33 toward the fuel cell stack 1 and a diffuser with a suction port for sucking the anode off-gas from the fuel cell stack 1. It should be noted that although the ejector 34 is used in a joined part of the anode gas supply passage 32 and the anode gas circulation passage 35 in the present embodiment, this joined part may be so configured that the anode gas circulation passage 35 is merely joined to the anode gas supply passage 32.

The anode gas circulation passage 35 is a passage for mixing the anode off-gas discharged from the fuel cell stack 1 and the anode gas being supplied from the high-pressure tank 31 to the fuel cell stack 1 via the anode pressure control valve 33 and circulating mixture gas in the anode gas supply passage 32. One end of the anode gas circulation passage 35 is connected to an anode gas output hole of the fuel cell stack 1 and the other end is connected to the suction port of the ejector 34.

The anode circulation pump 36 is provided in the anode gas circulation passage 35. The anode circulation pump 36 circulates the anode off-gas to the fuel cell stack 1 via the ejector 34. A rotation speed of the anode circulation pump 36 is controlled by the controller 200. In this way, a flow rate of the anode gas (and anode off-gas) circulating to the fuel cell stack 1 is adjusted. A flow rate of the anode gas circulating to the fuel cell stack 1 is referred to as an "anode gas circulation flow rate" below.

Here, the controller 200 estimates (calculates) the anode gas circulation flow rate as a flow rate in a standard state on the basis of the number of revolutions per unit time of the anode circulation pump 36, a temperature in the fuel cell stack 1 to be described later (or ambient temperature of the anode gas supplying/discharging device 3 detected by an unillustrated temperature sensor) and a pressure of the anode gas in the anode gas circulation passage 35 detected by the pressure sensor 37 to be described later. The anode gas circulation flow rate estimated in this way is utilized in various calculations in the control quantity compensating process to be described later.

The pressure sensor 37 is provided between the ejector 34 and the fuel cell stack 1 in the anode gas supply passage 32. The pressure sensor 37 detects the pressure of the anode gas in an anode gas circulation system. The pressure of the anode gas to be supplied to the fuel cell stack 1 is merely referred to as an "anode gas pressure" below. Anode gas pressure data detected by this pressure sensor 37 is output to the controller 200.

The purge valve 38 is provided in an anode gas discharge passage branched from the anode gas circulation passage 35. The purge valve 38 discharges impurities included in the anode off-gas to outside. The impurities mean nitrogen gas in the cathode gas permeated from the cathode gas flow passages 131 of the fuel cells 10 in the fuel cell stack 1 through the electrolyte membranes 111, water generated by the electrochemical reaction of the anode gas and the cathode gas associated with power generation and the like. An opening degree and an opening/closing frequency of the purge valve 38 are controlled by the controller 200.

It should be noted that, although not shown, the anode gas discharge passage joins the cathode gas discharge passage 25 on a side downstream of the cathode pressure control valve 26. This causes the anode off-gas discharged from the purge valve 38 to be mixed with the cathode off-gas in the cathode gas discharge passage 25. In this way, a hydrogen concentration in the mixture gas can be controlled to or below an allowable discharge concentration (4 %).

The stack cooling device 4 is a device for supplying the refrigerant for cooling each fuel cell 10 in the fuel cell stack 1 to the fuel cell stack 1 and adjusting the fuel cell stack 1 to a temperature suitable for power generation. In the present embodiment, cooling water is used as the refrigerant.

Further, the stack cooling device 4 functions as a gas temperature adjusting device for increasing the temperature of the cathode gas passing in the cathode gas flow passages 131 to increase the amount of steam in the cathode gas discharged from the fuel cell stack 1. Specifically, the stack cooling device 4 constitutes temperature adjusting means for adjusting the temperature of the oxidant supplied to the fuel cells 10.

As shown in FIG. 1, the stack cooling device 4 includes a cooling water circulation passage 41, a cooling water pump 42, a radiator 43, a bypass passage 44, a three-way valve 45, an inlet water temperature sensor 46, an outlet water temperature sensor 47 and a radiator fan 48.

The cooling water circulation passage 41 is a passage for circulating the cooling water to the fuel cell stack 1. One end of the cooling water circulation passage 41 is connected to a cooling water inlet hole of the fuel cell stack 1 and the other end is connected to a cooling water outlet hole of the fuel cell stack 1.

The cooling water pump 42 is provided in the cooling water circulation passage 41. The cooling water pump 42 supplies the cooling water to the fuel cell stack 1 via the radiator 43 and the three-way valve 45. A rotation speed of the cooling water pump 42 is controlled by the controller 200.

In a state where a temperature in the fuel cell stack 1 is higher than the temperature of the cooling water flowing into the fuel cell stack 1, the amount of heat radiated from the fuel cells 10 to the cooling water increases as the rotation speed of the cooling water pump 42 increases. In this way, the temperature of the fuel cell stack 1 decreases. On the other hand, in the same state, heat exchange efficiency decreases as the rotation speed of the cooling water pump 42 decreases. Thus, the temperature of the fuel cell stack 1 increases.

The radiator 43 is provided downstream of the cooling water pump 42 in the cooling water circulation passage 41. The radiator 43 cools the cooling water heated in the fuel cell stack 1 by blowing air by the rotation of the radiator fan 48 to be described later.

The bypass passage 44 is a passage for causing part of the cooling water to bypass the radiator 43 and a passage for directly circulating the cooling water discharged from the fuel cell stack 1 to the fuel cell stack 1. One end of the bypass passage 44 is connected to the cooling water circulation passage 41 between the cooling water pump 42 and the radiator 43 and the other end is connected to one nozzle of the three-way valve 45. It should be noted that a heater for warming up the fuel cell stack 1 when the fuel cell system 100 is started below a freezing point may be provided in the bypass passage 44.

The three-way valve 45 adjusts the temperature of the cooling water to be supplied to the fuel cell stack 1 by mixing the cooling water cooled via the radiator 43 and the cooling water not cooled by passing in the bypass passage 44. In the present embodiment, the three-way valve 45 is realized, for example, by a thermostat. However, the three-way valve 45 may be an electric valve, an opening degree (valve opening degree) of each nozzle of which is controlled by the controller 200. The three-way valve 45 is provided in a part of the cooling water circulation passage 41 between the radiator 43 and the cooling water inlet hole of the fuel cell stack 1 where the bypass passage 44 joins.

When the temperature of the cooling water is equal to or below a predetermined valve opening temperature, the cooling water circulation passage 41 from the radiator 43 to the fuel cell stack 43 is blocked and the three-way valve 45 supplies only the cooling water flowing by way of the bypass passage 44 to the fuel cell stack 1. In this way, the cooling water having a higher temperature than the cooling water flowing by way of the radiator 43 flows into the fuel cell stack 1.

On the other hand, if the temperature of the cooling water becomes higher than the predetermined valve opening temperature, the valve opening of the nozzle from the radiator 43 to the fuel cell stack 1 starts gradually increasing. Then, the three-way valve 45 mixes the cooling water flowing by way of the bypass passage 44 and the cooling water flowing by way of the radiator 43 and supplies the mixed cooling water to the fuel cell stack 1. In this way, the cooling water having a lower temperature than the cooling water flowing by way of the bypass passage 44 flows into the fuel cell stack 1.

The inlet water temperature sensor 46 is provided in the cooling water circulation passage 41 at a position near the cooling water inlet hole formed in the fuel cell stack 1. The inlet water temperature sensor 46 detects the temperature of the cooling water flowing into the cooling water inlet hole of the fuel cell stack 1. The temperature of the cooling water flowing into the cooling water inlet hole of the fuel cell stack 1 is referred to as a "stack inlet water temperature" below. Stack inlet water temperature detected by the inlet water temperature sensor 46 is output to the controller 200.

The outlet water temperature sensor 47 is provided in the cooling water circulation passage 41 at a position near the cooling water outlet hole formed in the fuel cell stack 1. The outlet water temperature sensor 47 detects the temperature of the cooling water discharged from the fuel cell stack 1. The temperature of the cooling water discharged from the fuel cell stack 1 is referred to as a "stack outlet water temperature" below. Stack outlet water temperature detected by the outlet water temperature sensor 47 is output to the controller 200.

The radiator fan 48 is provided near the radiator 43 and air-cools the cooling water passing through the radiator 48 by being rotated. A rotation speed of the radiator fan 48 is controlled by the controller 200 on the basis of the stack inlet water temperature and the stack outlet water temperature.

The temperature of the cooling water is used as the temperature of the fuel cell stack 1 or the temperature of the cathode gas by applying a predetermined processing. For example, an average value of the stack inlet water temperature detected by the inlet water temperature sensor 46 and the stack outlet water temperature detected by the outlet water temperature sensor 47 may be set as the temperature of the cooling water or the temperature of the fuel cell stack 1. The temperature of the cooling water is referred to as a "cooling water temperature" and the temperature of the fuel cell stack 1 is referred to as a "stack temperature" below.

The load device 5 is driven by receiving generated power supplied from the fuel cell stack 1. The load device 5 is constituted, for example, by a drive motor (electric motor) for driving the vehicle, some of auxiliary machines for assisting the power generation of the fuel cell stack 1, a control unit for controlling the drive motor or the like. Examples of the auxiliary machines for the fuel cell stack 1 include the compressor 22, the anode circulation pump 36 and the cooling water pump 42.

Further, the load device 5 may include a DC/DC converter for stepping up and down an output voltage of the fuel cell stack 1 on an output side of the fuel cell stack 1 and a drive inverter for converting direct-current power into alternating-current power between the DC/DC converter and the drive motor. In this case, a high-voltage battery may be provided electrically in parallel with the fuel cell stack 1 with respect to the drive motor. Further, the load device 5 may be configured to connect some of the auxiliary machines to a power line between the DC/DC converter and the high-voltage battery. It should be noted that a control unit (not shown) for controlling the load device 5 outputs power required to the fuel cell stack 1 to the controller 200. For example, the required power of the load device 5 increases as an accelerator pedal provided in the vehicle is depressed more.

A current sensor 51 and a voltage sensor 52 are arranged in a power line between the load device 5 and the fuel cell stack 1.

The current sensor 51 is connected to the power line between a positive electrode terminal 1p of the fuel cell stack 1 and the load device 5. The current sensor 51 detects a current output from the fuel cell stack 1 to the load device 5 as output power of the fuel cell stack 1. The current output from the fuel cell stack 1 to the load device 5 is referred to as a "stack output current" below. Stack output current data detected by the current sensor 51 is output to the controller 200.

The voltage sensor 52 is connected between the positive electrode terminal 1p and a negative electrode terminal In of the fuel cell stack 1. The voltage sensor 52 detects an inter-terminal voltage, which is a potential difference between the positive electrode terminal 1p and the negative electrode terminal In of the fuel cell stack 1. The inter-terminal voltage of the fuel cell stack 1 is referred to as a "stack output voltage" below. Stack output voltage data detected by the voltage sensor 52 is output to the controller 200.

The impedance measuring device 6 is a device for measuring an internal impedance of the fuel cell stack 1. The internal impedance of the fuel cell stack 1 is correlated with the wet/dry state of the electrolyte membranes 111. Thus, by measuring the internal impedance of the fuel cell stack 1, the wet/dry state of the electrolyte membranes 111 can be detected (estimated) on the basis of that measurement result.

Generally, the internal impedance of the fuel cell stack 1 increases as the water content of the electrolyte membranes decreases, i.e. as the electrolyte membranes become drier. On the other hand, the internal impedance of the fuel cell stack 1 decreases as the water content of the electrolyte membranes increases, i.e. as the electrolyte membranes become wetter. Thus, the internal impedance of the fuel cell stack 1 is used as a parameter indicating the wet/dry state of the electrolyte membranes 111.

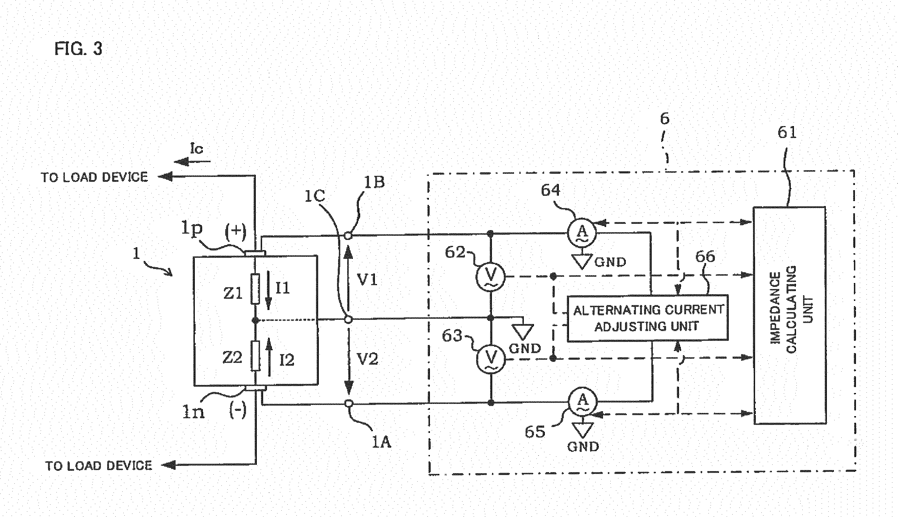

Here, the configuration of the impedance measuring device 6 is described. FIG. 3 is a circuit diagram of the impedance measuring device 6 for measuring the internal impedance of the fuel cell stack 1 shown in FIG. 1. Connection indicated by solid line indicates electrical connection and connection indicated by broken line (dashed line) indicates electrical signal connection.

This impedance measuring device 6 is connected to a terminal 1B extending from the positive electrode terminal (cathode-electrode side terminal) 1p, a terminal 1A extending from the negative electrode terminal (anode-electrode side terminal) In and an intermediate terminal 1C of the fuel cell stack 1. It should be noted that a part connected to the intermediate terminal 1C is grounded as shown.

As shown in FIG. 3, the impedance measuring device 6 includes a positive-electrode side voltage sensor 62, a negative-electrode side voltage sensor 63, a positive-electrode side power supply unit 64, a negative-electrode side power supply unit 65, an alternating current adjusting unit 66 and an impedance calculating unit 61.

The positive-electrode side voltage sensor 62 is connected to the terminal 1B and the intermediate terminal 1C, measures a positive-electrode side alternating-current potential difference V1 of the terminal 1B with respect to the intermediate terminal 1C at a predetermined frequency and outputs that measurement result to the alternating current adjusting unit 66 and the impedance calculating unit 61. The negative-electrode side voltage sensor 63 is connected to the intermediate terminal 1C and the terminal 1A, measures a negative-electrode side alternating-current potential difference V2 of the terminal 1A with respect to the intermediate terminal 1C at the predetermined frequency and outputs that measurement result to the alternating current adjusting unit 66 and the impedance calculating unit 61.

The positive-electrode side power supply unit 64 is realized, for example, by a voltage-current conversion circuit by an unillustrated operational amplifier, and controlled by the alternating current adjusting unit 66 so that an alternating current I1 of the predetermined frequency flows into a closed circuit composed of the terminal 1B and the intermediate terminal 1C. Further, the negative-electrode side power supply unit 65 is realized, for example, by a voltage-current conversion circuit by an unillustrated operational amplifier, and controlled by the alternating current adjusting unit 66 so that an alternating current 12 of the predetermined frequency flows into a closed circuit composed of the terminal 1A and the intermediate terminal 1C.

Here, the "predetermined frequency" is a frequency suitable for detecting an impedance of the electrolyte membranes 111. This predetermined frequency is referred to as an "electrolyte membrane response frequency" below.

The alternating current adjusting unit 66 is realized, for example, by an unillustrated PI control circuit and generates command signals to the positive-electrode side power supply unit 64 and the negative-electrode side power supply unit 65 so that the alternating currents I1, I2 as described above flow into the respective closed circuits. By increasing or decreasing the positive-electrode side power supply unit 64 and the negative-electrode side power supply unit 65 according to the thus generated command signals, the alternating-current potential differences V1 and V2 between the terminals are both controlled to a predetermined level (predetermined value). In this way, the alternating-current potential differences V1 and V2 become equal.

The impedance calculating unit 61 includes hardware such as unillustrated AD converter, microchip and the like and a software configuration such as a program for calculating an impedance. The impedance calculating unit 61 converts the alternating-current voltages (V1, V2) and the alternating currents (I1, I2) input from each component 62, 63, 64, 65 into digital numeric signals by the AD converter and performs a processing for impedance measurement.

Specifically, the impedance calculating unit 61 calculates a first impedance Z1 from the intermediate terminal 1C to the terminal 1B by dividing an amplitude of the positive-electrode side alternating-current potential difference V1 by that of the alternating current I1. Further, the impedance calculating unit 61 calculates a second impedance Z2 from the intermediate terminal 1C to the terminal 1A by dividing an amplitude of the negative-electrode side alternating-current potential difference V2 by that of the alternating current 12. Furthermore, the impedance calculating unit 61 calculates an internal impedance Z of the fuel cell stack 1 by adding the first and second impedances Z1 and Z2.

It should be noted that, if the DC/DC converter is provided as the load device 5, the controller 200 may cause the DC/DC converter to step up the output voltage of the fuel cell stack 1 in measuring the internal impedance of the fuel cell stack 1. This causes the impedance to increase when the side of the fuel cell stack 1 is viewed from the drive inverter, thereby achieving an effect of not adversely affecting the impedance measurement even if there is a load variation.

In FIG. 3, the terminals 1B and 1A are shown to be directly connected to each output terminal of the fuel cell stack 1 for the sake of illustration. However, in the fuel cell system 100 of the present embodiment, there is no limitation to such connection and the terminals 1B and 1A may be connected to a positive electrode terminal of the fuel cell on the most positive-electrode side and a negative electrode terminal of the fuel cell on the most negative-electrode side, out of a plurality of fuel cells laminated in the fuel cell stack 1.

Further, in the present embodiment, the impedance calculating unit 61 is configured to calculate the internal impedance of the fuel cell stack 1 by executing a program stored in advance in an unillustrated memory by the hardware such as the microchip. However, the impedance calculating unit 61 is not limited to such a configuration. For example, the impedance calculating unit 61 may be realized by an analog computation circuit using an analog computation IC. By using the analog computation circuit, a temporally continuous impedance change can be output.

Here, in the present embodiment, the impedance measuring device 6 uses alternating-current signals constituted by sine wave signals as the alternating currents and alternating-current voltages. However, these alternating-current signals are not limited to sine wave signals and may be rectangular wave signals, triangular wave signals, sawtooth signals or the like.

The internal impedance measured on the basis of the electrolyte membrane response frequency is referred to as a HFR (High Frequency Resistance) below. The impedance measuring device 6 outputs the calculated HFR to the controller 200.

Referring back to FIG. 1, although not shown, the controller 200 is configured by a microcomputer including a central processing unit (CPU), a read-only memory (ROM), a random access memory (RAM) and an input/output interface (I/O interface).

An output signal of each of the flow rate sensor 23, the pressure sensor 24, the pressure sensor 37, the inlet water temperature sensor 46, the outlet water temperature sensor 47, the current sensor 51, the voltage sensor 52 and the impedance measuring device 6 and the required power of the load device 5 are input to the controller 200. These signals are used as parameters relating to an operating state of the fuel cell system 100.

The controller 200 controls the flow rate and pressure of the cathode gas to be supplied to the fuel cell stack 1 by controlling the compressor 22 and the cathode pressure control valve 26 according to the operating state of the fuel cell system 100. Further, the controller 200 controls the flow rate and pressure of the anode gas to be supplied to the fuel cell stack 1 by controlling the anode pressure control valve 33 and the anode circulation pump 36. Furthermore, the controller 200 controls the temperature of each fuel cell 10 in the fuel cell stack 1 (cooling water temperature or stack temperature) and the temperature of the cathode gas supplied to the fuel cell stack 1 by controlling the cooling water pump 42, the three-way valve 45 and the radiator fan 48 according to the operating state of the fuel cell system 100.

For example, the controller 200 calculates a target flow rate and a target pressure of the cathode gas, a target flow rate and a target pressure of the anode gas and a target temperature of the cooling water (target cooling water temperature) on the basis of the required power of the load device 5 as described later. The controller 200 controls the rotation speed of the compressor 22 and the opening degree of the cathode pressure control valve 26 on the basis of the target flow rate and target pressure of the cathode gas. Further, the controller 200 controls the rotation speed of the anode circulation pump 36 and the opening degree of the anode pressure control valve 33 on the basis of the target flow rate and target pressure of the anode gas.

Further, the controller 200 calculates the target cooling water temperature for maintaining the power generation performance of the fuel cell stack 1 and controls the rotation speed of the cooling water pump 42 on the basis of the target cooling water temperature. For example, the controller 200 executes a control to set the rotation speed of the cooling water pump 42 higher when the cooling water temperature is higher than the target cooling water temperature than when the cooling water temperature is lower than the target cooling water temperature.

In such a fuel cell system 100, if the degree of wetness (water content) of each electrolyte membrane 111 becomes excessively high or excessively low, the power generation performance thereof is reduced. To cause the fuel cell stack 1 to efficiently generate power, it is important to maintain the electrolyte membranes 111 of the fuel cell stack 1 at a suitable degree of wetness. To that end, the controller 200 manipulates the wet/dry state of the fuel cell stack 1 so that the wet/dry state of the fuel cell stack 1 is suitable for power generation within a range where the required power of the load device 5 can be ensured.

To cause the wet/dry state of the fuel cell stack 1 to transfer to a dry side, i.e. to reduce excess moisture of the electrolyte membranes 111 is referred to as a "dry operation". Further, to cause the wet/dry state of the fuel cell stack 1 to transfer to a wet side, i.e. to increase moisture of the electrolyte membranes 111 is referred to as a "wet operation".

In the present embodiment, for a wet/dry control of manipulating the wet/dry state of the fuel cell stack 1, the controller 200 controls at least one of the cathode gas flow rate, the cathode gas pressure, the anode gas flow rate and the cooling water temperature. A specific wet/dry control is described later.

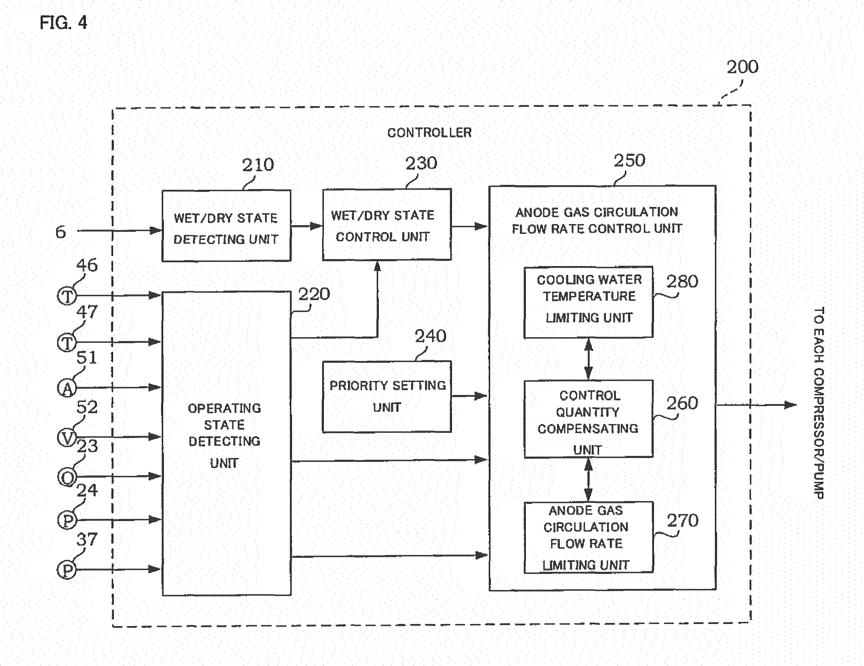

Next, control functions of the controller 200 for controlling the fuel cell system 100 of the present embodiment are described. FIG. 4 is a block diagram showing an example of a functional configuration of the controller 200 for controlling the fuel cell system 100 in the present embodiment. It should be noted that functions relating to the present invention are mainly shown in the functional block diagram of the controller 200 shown in FIG. 4 and some of functions relating to a normal operation control of the fuel cell system 100 are omitted.

As shown in FIG. 4, the controller 200 of the present embodiment includes a wet/dry state detecting unit 210, an operating state detecting unit 220, the wet/dry state control unit 230, a priority setting unit 240 and an anode gas circulation flow rate control unit 250. Further, the anode gas circulation flow rate control unit 250 includes a control quantity compensating unit 260, an anode gas circulation flow rate limiting unit 270 and a cooling water temperature limiting unit 280.

The wet/dry state detecting unit 210 detects the wet/dry state of the electrolyte membranes 111 of the fuel cells 10 in the fuel cell stack 1. Specifically, the wet/dry state detecting unit 210 obtains the HFR of the fuel cell stack 1 measured by the impedance measuring device 6. Then, the wet/dry state detecting unit 210 refers to an impedance-degree of wetness map stored in advance in the unillustrated memory and detects the degree of wetness of the electrolyte membranes 111. The detected degree of wetness data is output to the wet/dry state control unit 230. It should be noted that the HFR output from the impedance measuring device 6 is referred to as a "measured HFR" below.

In the present embodiment, the wet/dry state detecting unit 210 is described to detect/calculate the wet/dry state of the electrolyte membranes 111 of the fuel cells 10 in the fuel cell stack 1 on the basis of the HFR of the fuel cell stack 1 measured by the impedance measuring device 6. However, the wet/dry state detecting unit 210 may output the obtained HFR as it is to a subsequent stage and each unit in the subsequent stage may execute a control using that HFR.

The operating state detecting unit 220 obtains the stack inlet water temperature data and the stack outlet water temperature data detected by the inlet water temperature sensor 46 and the outlet water temperature sensor 47 and detects the stack temperature (cooling water temperature) of the fuel cell stack 1 by calculating an average value of the stack inlet water temperature and the stack outlet water temperature. Further, the operating state detecting unit 220 obtains the stack output current data and the stack output voltage data of the fuel cell stack 1 detected by the current sensor 51 and the voltage sensor 52 and detects the output power of the fuel cell stack 1 by multiplying the stack output current and the stack output voltage.

Further, the operating state detecting unit 220 obtains the cathode gas flow rate data detected by the flow rate sensor 23 and the cathode gas pressure data detected by the pressure sensor 24 and detects an operating state of the cathode gas supplying/discharging device 2. Similarly, the operating state detecting unit 220 obtains the anode gas pressure data detected by the pressure sensor 37 and detects an operating state of the anode gas supplying/discharging device 3 by estimating the anode gas circulation flow rate.

It should be noted that the operating state detecting unit 220 also obtains various pieces of command value data calculated by unillustrated various calculating units in the controller 200. Various pieces of instruction data includes at least rotation speed data of the compressor 22, opening degree data of the cathode pressure control valve 26, opening degree data of the anode pressure control valve 33, rotation speed data of the anode circulation pump 36, rotation speed data of the cooling water pump 42, opening degree data of each nozzle of the three-way valve 45 and rotation speed data of the radiator fan 48.

Further, in the present embodiment, the operating state detecting unit 220 is described to detect/calculate on the basis of the obtained data as described above. However, the operating state detecting unit 220 may output the obtained data as it is to a subsequent stage and each unit in the subsequent stage may execute a control using these pieces of data.

The wet/dry state control unit 230 controls the wet/dry state of the electrolyte membranes 111 of the fuel cells 10 by manipulating a plurality of physical quantities including the anode gas circulation flow rate (controlling corresponding actuators). The wet/dry state control unit 230 obtains the measured HFR of the electrolyte membranes 111 detected by the wet/dry state detecting unit 210 and operation data relating to the degree of wetness detected by the operating state detecting unit 220, and calculates the current water balance and a target water balance. Then, the wet/dry state control unit 230 outputs the calculated target water balance to the control quantity compensating unit 260. It should be noted that the target water balance is a parameter correlated with the degree of wetness of the electrolyte membranes 111 and indicating the excess or deficiency of moisture with respect to a targeted wet/dry state of the electrolyte membranes 111. The target water balance means target water supply and generation amounts (i.e. the amount of water supplied via the anode gas circulation passage 35 and the amount of water generated by the electrochemical reaction) to the fuel cell stack 1 during the dry operation and means target water discharge amounts (i.e. the amount of water discharged via the cathode gas discharge passage 25 and the amount of water discharged via the purge valve 38) during the wet operation.

Here, the wet/dry state control unit 230 may control the wet/dry state of the electrolyte membranes 111 of the fuel cells 10 by controlling a plurality of actuators (anode circulation pump 36, etc.) on the basis of a wet/dry state target value of the electrolyte membranes 111 of the fuel cells 10 set on the basis of the operating state of the fuel cell system 100 and the current wet/dry state detection value of the electrolyte membranes 111 of the fuel cells 10 detected by the wet/dry state detecting unit 210.

It should be noted that the "water balance" in the present embodiment means a value obtained by adding the amount of moisture generated by the power generation (electrochemical reaction) of the fuel cell stack 1 and the amount of moisture of circulating storage water stored (retained) in the anode gas circulation passage 35 and subtracting the amount of moisture discharged from the fuel cell stack 1 by being included in the cathode off-gas from that added value. In a steady state, since the amount of moisture generated by the power generation and the amount of moisture discharged together with the cathode off-gas are substantially equal, the wet/dry state of the electrolyte membranes 111 is determined on the basis of an increase or decrease of the circulating storage water.

For example, if the measured HFR is smaller than a target value, the wet/dry state control unit 230 determines that the electrolyte membranes 111 have a high moisture content and sets a negative (-) value smaller than zero (0) as the target water balance. On the other hand, if the measured HFR is larger than the target value, the wet/dry state control unit 230 determines that the electrolyte membranes 111 have a low moisture content and sets a positive (+) value larger than zero (0) as the target water balance.

Here, in the present embodiment, the "plurality of physical quantities" include the flow rate (hereinafter, merely referred to as a "cathode gas flow rate") and pressure (hereinafter, merely referred to as a "cathode gas pressure") of the cathode gas to be supplied from the compressor 22 to the fuel cell stack 1 and the temperature of the cooling water (hereinafter, merely referred to as a "cooling water temperature") to be supplied to the fuel cell stack 1 by the cooling water pump 42 in addition to the circulation flow rate of the anode gas flowing in the anode gas circulation passage 35. The stack inlet water temperature or the stack temperature, which is an average value of the stack inlet water temperature and the stack outlet water temperature, may be, for example, utilized as the cooling water temperature.

The priority setting unit 240 sets priority levels of a normal manipulation for the plurality of physical quantities (i.e. anode gas circulation flow rate, cathode gas flow rate, cathode gas pressure and cooling water temperature) manipulated by the wet/dry state control unit 230 particularly for the start of the dry operation and the wet operation. The priority setting unit 240 sets the priority levels for the plurality of physical quantities such that a degree of priority becomes lower in an order of (1) reduction of the cathode gas pressure, (2) reduction of the anode gas flow rate, (3) increase of the cooling water temperature and (4) increase of the cathode gas flow rate in the case of the dry operation. On the other hand, the priority setting unit 240 sets the priority levels for the plurality of physical quantities such that a degree of priority becomes lower in an order of (1) reduction of the cathode gas flow rate, (2) reduction of the cooling water temperature, (3) increase of the anode gas flow rate and (4) increase of the cathode gas pressure in the case of the wet operation.

Here, a method for controlling each physical quantity is briefly described. A cathode gas flow rate control is mainly executed by the compressor 22 and a cathode gas pressure control is mainly executed by the cathode pressure control valve 26. Further, an anode gas circulation flow rate control is mainly executed by the anode circulation pump 36. A cooling water temperature control is mainly executed by the cooling water pump 42.

For example, in the dry operation, the anode gas circulation flow rate control unit 250 and the control quantity compensating unit 260 of the controller 200 decrease the cathode gas pressure, decrease the anode gas flow rate, increase the cooling water temperature or increase the cathode gas flow rate to increase the moisture discharged from the fuel cell stack 1. On the other hand, in the wet operation, the anode gas circulation flow rate control unit 250 and the control quantity compensating unit 260 of the controller 200 decrease the cathode gas flow rate, decrease the cooling water temperature, increase the anode gas flow rate or increase the cathode gas pressure. It should be noted that the water balance is increased and decreased by increasing and decreasing the cathode gas pressure because a volumetric flow rate of the moisture (steam) included in the cathode gas changes.

The priority levels are set for the plurality of physical quantities in this way in consideration of the power consumption and responsiveness of the compressor 22, the cathode pressure control valve 26, the anode circulation pump 36 and the cooling water pump 42 for controlling the plurality of physical quantities in addition to the purpose of achieving the target water balance calculated by the wet/dry state control unit 230 as early as possible.

An increase in the number of revolutions of the compressor 22 leads particularly to an increase of power consumption, and increases in the numbers of revolutions of the cooling water pump 42 and the anode circulation pump 36 also lead to an increase of power consumption. On the other hand, it does not consume much power to open and close the cathode pressure control valve 26. Thus, the priority levels set by the priority setting unit 240 are just opposite between the dry operation and the wet operation.

Further, the plurality of physical quantities are not simultaneously controlled, but are controlled with the priority levels given because how much the control of these auxiliary machines 22, 26, 36 and 42 contributes to the target water balance cannot be confirmed in real time and there is a possibility of the overshooting of the control and hunting. Particularly, if the dry operation control overshoots, the electrolyte membranes 111 of the fuel cells 10 are possibly broken or degraded. Thus, in the present embodiment, the control is executed with the priority levels given to the plurality of physical quantities.

The anode gas circulation flow rate control unit 250 controls the circulation flow rate of the anode gas flowing in the anode gas circulation passage 35 on the basis of the wet/dry state of the electrolyte membranes 111 detected by the wet/dry state detecting unit 210. The anode gas circulation flow rate control unit 250 controls the opening degree of the anode pressure control valve 33 and controls the rotation speed of the anode circulation pump 36 on the basis of the anode gas circulation flow rate estimated by the operating state detecting unit 220, the required power of the load device 5 input from the load device 5 and the output power of the fuel cell stack 1 detected by the operating state detecting unit 220. In this way, the circulation flow rate of the anode gas circulating in the anode gas circulation passage 35 can be controlled.

It should be noted that, in a transient state where the rotation speed of the anode circulation pump 36 is increased from a state of a predetermined speed or lower (including an idling stop control for stopping the anode circulation pump 36), the anode gas circulation flow rate control unit 250 calculates a target anode gas circulation flow rate as described later. Here, the anode gas flowing in the anode gas flow passage 121 shown in FIG. 2 is humidified by steam leaked (permeated) from a downstream side of the cathode gas flow passage 131 via the electrolyte membrane 111. If the circulation flow rate of the humidified anode gas is increased, the moisture included in the anode gas easily spreads from upstream sides to downstream sides of the anode gas flow passages 121 and the degree of wetness of the fuel cell stack 1 easily increases.

Thus, the anode gas circulation flow rate is decreased in consideration of a state in the anode gas flow passages 121, for example, at the start of the dry operation. Thus, the moisture flowing into the fuel cell stack 1 becomes more than the moisture carried out from the fuel cell stack 1. Thus, at the start of the dry operation, the wet operation is transiently performed.

On the other hand, the anode gas circulation flow rate is increased in consideration of a state in the anode gas flow passages 121 at the start of the wet operation. Thus, the moisture flowing into the fuel cell stack 1 becomes less than the moisture carried out from the fuel cell stack 1. Thus, at the start of the wet operation, the dry operation is transiently performed.

In the fuel cell system 100 of the present embodiment, to reduce or suppress such a problem, a change rate (change amount) of the anode gas circulation flow rate is limited and the other physical quantities are controlled according to the priority levels in the case of increasing or decreasing the anode gas circulation flow rate as described later.

As described later, the control quantity compensating unit 260 compensates for a control quantity insufficient due to the limitation of the anode gas circulation flow rate (control quantity necessary to reach the target water balance) by the manipulation of the physical quantity having a lower priority of the normal manipulation than the anode gas circulation flow rate set by the priority setting unit 240 at least when the change rate of the anode gas circulation flow rate is limited by the anode gas circulation flow rate limiting unit 270. The manipulation of the control quantity compensating unit 260 is described in detail layer.

The anode gas circulation flow rate limiting unit 270 limits a change rate (or change amount) per unit time of the anode gas circulation flow rate during a transient operation of changing the wet/dry state of the electrolyte membranes 111 of the fuel cells 10 to suppress operations opposite to the intended ones and transiently performed at the start of the dry operation and the wet operation.

In the present embodiment, the anode gas circulation flow rate limiting unit 270 sets a command value (limit value) to limit the change rate of the target anode gas circulation flow rate in the dry operation if the target anode gas circulation flow rate set by the anode gas circulation flow rate control unit 250 is smaller than the current anode gas circulation flow rate.

Further, the anode gas circulation flow rate limiting unit 270 sets a command value to limit the change rate of the target anode gas circulation flow rate in the wet operation if the target anode gas circulation flow rate set by the anode gas circulation flow rate control unit 250 is larger than the current anode gas circulation flow rate.

Here, an example of a method for determining the limit value of the change rate for the anode gas circulation flow rate is briefly described. The change rate for the anode gas circulation flow rate is determined in view of a time until the anode off-gas discharged from the fuel cell stack 1 returns to the fuel cell stack 1 via the anode gas circulation passage 35, the ejector 34 and the anode gas supply passage 32. Particularly, such a change rate is determined which prevents the transient operation opposite to the intended one even if the anode gas circulation passage 35 is long and it takes time for the anode off-gas to circulate around.

Specifically, the limit value is calculated by the following arithmetic expressions. The anode gas circulation flow rate limiting unit 270 calculates, for example, every 10 msec. on the basis of these arithmetic expressions (1) and (2) and controls the change rate of the anode gas circulation flow rate.

Up-Side Limit

[Equation 1]

$$Q_{n+1} = Q_n + \min(\frac{\Delta Q}{t_{max}} \Delta t, Q_{target} - Q_n) \qquad \dots (1)$$

Down-Side Limit

[Equation 2]

$$Q_{n+1} = Q_n - \min(\frac{\Delta Q}{t_{max}} \Delta t, Q_n - Q_{target}) \qquad \dots (2)$$

Here, each character denotes the following content.

$t_{max}$: time required to circulate around in the anode gas circulation passage 35 at a minimum flow rate.

$\Delta Q$: difference between minimum flow rate and maximum flow rate
$\Delta t$: control cycle (10 msec. in the present embodiment as described above)
$Q_n$: current target flow rate
$Q_{target}$: next target flow rate without change rate being limited
$Q_{n+1}$: next target flow rate

The cooling water temperature limiting unit 280 limits a change rate per unit time of the cooling water temperature during a transient operation of changing the wet/dry state of the electrolyte membranes 111 to suppress a transient operation opposite to the intended one at the start of the dry operation. In the present embodiment, the cooling water temperature limiting unit 280 limits the change rate per unit time of the cooling water temperature only when the limiting of the change rate of the target anode gas circulation flow rate by the anode gas circulation flow rate limiting unit 270 has not been completed yet even if the physical quantities having a higher priority than the cooling water temperature in the dry operation, i.e. the cathode gas pressure and the anode gas flow rate are controlled.

An example of a method for determining a limit value of the change rate for the cooling water temperature is briefly described. The change rate for the cooling water temperature is determined in view of a response time (time constant or settling time) to the cathode gas flow rate so that compensation by the cathode gas flow rate having a lower priority than the cooling water temperature works in the transient time of the dry operation. In this case, as the response time to the target cooling water temperature becomes longer, the change rate for the cooling water temperature is determined to be more strictly limited. Particularly, since the responsiveness of the cooling water temperature is slower than the other physical quantities, the change rate is determined such that the control does not overshoot.

Specifically, the limit value is calculated by the following arithmetic expressions. The cooling water temperature limiting unit 280 calculates, for example, every 10 msec. on the basis of these arithmetic expressions and controls the change rate of the cooling water temperature.

Up-Side Limit

[Equation 3]

$$T_{n+1} = T_n + \min(\frac{\Delta T_{max}}{\tau_{max}} \Delta t, T_{target} - T_n) \qquad \dots (3)$$

Down-Side Limit

[Equation 4]

$$T_{n+1} = T_n - \min(\frac{\Delta T_{max}}{\tau_{max}} \Delta t, T_n - T_{target}) \qquad \dots (4)$$

Here, each character denotes the following content.

$\tau_{max}$: response (settling) time of cathode gas flow rate
$\Delta T_{max}$: difference between minimum cooling water temperature and maximum cooling water temperature
$\Delta t$: control cycle (10 msec. in the present embodiment as described above)
$T_n$: current target cooling water temperature
$T_{target}$: next target cooling water temperature without change rate being limited
$T_{n+1}$: next target cooling water temperature

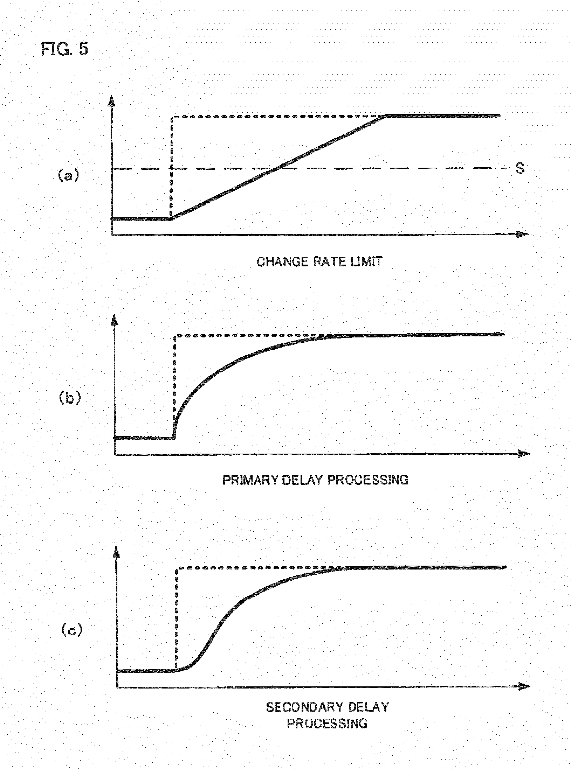

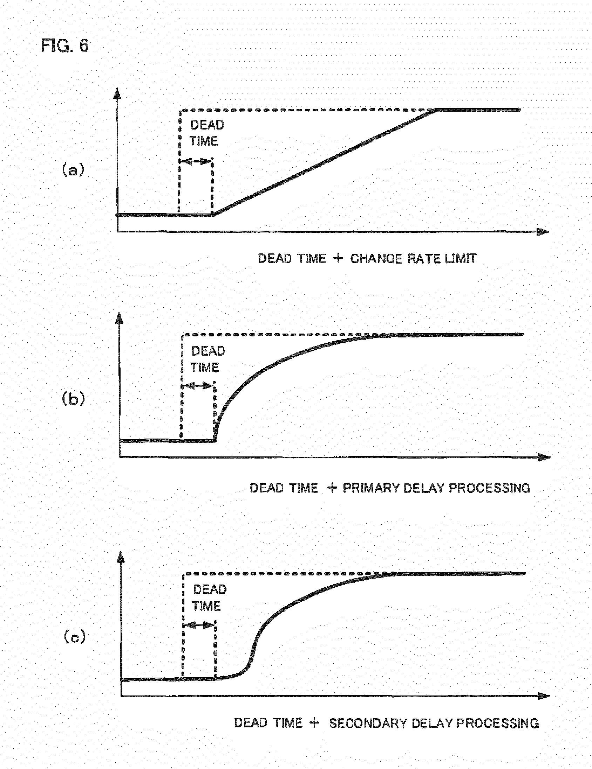

Here, examples of methods for limiting the change rates of the control quantities of the anode gas circulation flow rate limiting unit 270 and the cooling water temperature limiting unit 280 are described. FIGS. 5 and 6 are charts showing the examples of the methods for limiting the change rates of the anode gas circulation flow rate limiting unit and the cooling water temperature limiting unit shown in FIG. 4. It should be noted that a dotted line indicates a command value when the change rate of the control quantity is not limited, and a solid line indicates a command value when the change rate of the control quantity is limited. It should be noted that although only a case of increasing the control quantity is shown in this example, a command value is line-symmetrical with respect to a line S (see FIG. 5(a)) indicating an average value of an initial value and a final command value in the case of decreasing the control quantity.

In FIG. 5(a), the change rate of the control quantity is simply limited. A limit of the change rate of this control quantity can be provided by making a change amount per unit time of the command value constant, i.e. making a gradient of the command value with respect to time in transient time constant.

In the present embodiment, the method for limiting the change rates of the control quantities of the anode gas circulation flow rate limiting unit 270 and the cooling water temperature limiting unit 280 is not limited to such simple limits of the change rates. For example, the change rates of the control quantities may be limited using a first-order delay processing (see FIG. 5(b)) or a second-order delay processing (see FIG. 5(c)).

Further, as shown in FIGS. 6(a) to 6(c), the change rates of the anode gas circulation flow rate and the cooling water temperature may be made even gentler by setting a dead time in advance for the method for limiting the change rates shown in FIGS. 5(a) to 5(c). Further, in the present embodiment, the change rates may be limited not only by first-order delay and second-order delay, but also by a nonlinear filter or the like.

Various command values calculated by the anode gas circulation flow rate control unit 250 and the control quantity compensating unit 260, the anode gas circulation flow rate limiting unit 270 and the cooling water temperature limiting unit 280 inside the anode gas circulation flow rate control unit 250 are output to each of the compressor 22, the cathode pressure control valve 26, the anode pressure control valve 33 and the cooling water pump 42 serving as targets.

Next, functions of the control quantity compensating unit 260 of the controller 200 of the present embodiment are described separately in the case of the dry operation and in the case of the wet operation.

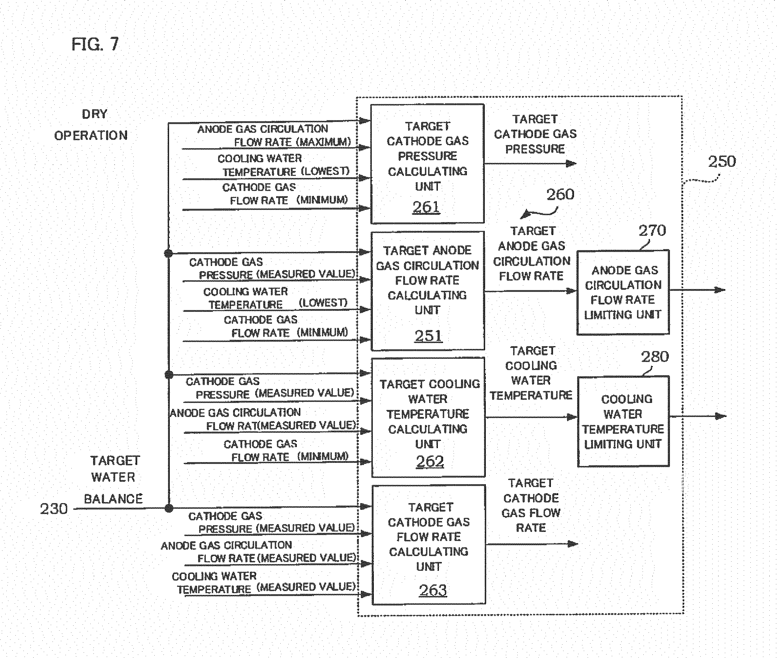

First, the functions of the control quantity compensating unit 260 of the controller 200 in the case of the dry operation are described. FIG. 7 is a diagram showing an example of a functional configuration in the dry operation of the control quantity compensating unit 260 shown in FIG. 4. Here, control parameters when the dry operation is performed by the controller 200 are shown. As shown in FIG. 7, the anode gas circulation flow rate control unit 250 includes a target anode gas circulation flow rate calculating unit 251. Further, the control quantity compensating unit 260 includes a target cathode gas calculating unit 261, a target cooling water temperature calculating unit 262 and a target cathode gas flow rate calculating unit 263.

In the present embodiment, the priority levels of control targets are set in a decreasing order from top of FIG. 7 in the dry operation by the priority setting unit 240 as described above. A target control quantity corresponding to each calculating unit 261 to 263, 251 is calculated below in a decreasing order of the priority.

First, the wet/dry state control unit 230 obtains the degree of wetness data of the electrolyte membranes 111 detected by the wet/dry state detecting unit 210 and operation data relating to the degree of wetness detected by the operating state detecting unit 220, calculates the current water balance and calculates the target water balance. The calculated target water balance is output to each of the target cathode gas pressure calculating unit 261, the target anode gas circulation flow rate calculating unit 251, the target cooling water temperature calculating unit 262 and the target cathode gas flow rate calculating unit 263.

Subsequently, the target cathode gas pressure calculating unit 261 calculates a target value of the cathode gas pressure (hereinafter, referred to as a "target cathode gas pressure") for setting the pressure of the cathode gas to be supplied to the fuel cell stack 1. In the present embodiment, the cathode gas pressure is the physical quantity having a highest priority in the dry operation.

The target cathode gas pressure calculating unit 261 calculates the target cathode gas pressure on the basis of the target water balance and rated values of each pump/compressor stored in advance in the unillustrated memory of the controller 200. The rated value of each pump/compressor includes a maximum value of the circulation flow rate of the anode gas dischargeable by the anode circulation pump 36 (hereinafter, referred to as a "maximum anode gas circulation flow rate"), a minimum value of the cooling water temperature requiring no cooling by the cooling water pump 42 (hereinafter, referred to as a "minimum cooling water temperature") and a minimum value of the flow rate of the cathode gas dischargeable by the compressor 22 (minimum cathode gas flow rate). As just described, in the case of calculating the physical quantity having a highest priority, the controls for the other physical quantities are set not to contribute to the dry operation at all.

Specifically, the target cathode gas pressure calculating unit 261 calculates the target cathode gas pressure on the basis of the target water balance, the maximum anode gas circulation flow rate, the minimum cooling water temperature and the minimum cathode gas flow rate. Then, the target cathode gas pressure calculating unit 261 calculates a target opening degree of the cathode pressure control valve 26 on the basis of the calculated target cathode gas pressure and controls the opening/closing of the cathode pressure control valve 26 on the basis of the calculated target opening degree.

The target cathode gas pressure calculating unit 261 sets a larger opening degree of the cathode pressure control valve 26 to reduce the degree of wetness (moisture) of the electrolyte membranes 111 as the target water balance decreases. In this way, the volumetric flow rate of the moisture in the cathode gas flow passages 131 of the fuel cells 10 increases and the moisture discharged from the fuel cell stack 1 increases.

Subsequently, the target anode gas circulation flow rate calculating unit 251 calculates a target value of the anode gas circulation flow rate for setting the circulation flow rate of the anode gas circulating in the anode gas circulation passage 35 (hereinafter, referred to as a "target anode gas circulation flow rate"). In the present embodiment, the anode gas circulation flow rate is the physical quantity having a second highest priority. The target anode gas circulation flow rate calculating unit 251 calculates the target anode gas circulation flow rate on the basis of the target water balance, the measured value of the cathode gas pressure and the minimum cooling water temperature and the minimum cathode gas flow rate. In this way, as the priority becomes lower, a target value is calculated using an actually measured value or estimated value for the physical quantity having a higher priority than that of the physical quantity being currently controlled. This enables the control quantity of the dry operation (control amount of the wet/dry state) to be compensated for by the control of the physical quantity having a next highest priority when a desired water balance (degree of wetness) is not reached only by the control of the physical quantity having a high priority.

Specifically, the target anode gas circulation flow rate calculating unit 251 obtains the cathode gas pressure detected by the pressure sensor 24 and output to the operating state detecting unit 220 (hereinafter, referred also as a "measured cathode gas pressure"). Then, the target anode gas circulation flow rate calculating unit 251 calculates the target anode gas circulation flow rate on the basis of the target water balance, the measured cathode gas pressure, the minimum cooling water temperature and the minimum cathode gas flow rate. The target anode gas circulation flow rate calculating unit 251 outputs the calculated target anode gas circulation flow rate to the anode gas circulation flow rate limiting unit 270.

The anode gas circulation flow rate limiting unit 270 calculates a limit value for limiting the change rate per unit control time (10 msec. in the present embodiment) of the anode gas circulation flow rate on the basis of the current anode gas circulation flow rate (see FIG. 4) detected by the operating state detecting unit 220 and the target anode gas circulation flow rate obtained from the target anode gas circulation flow rate calculating unit 251.

The anode gas circulation flow rate limiting unit 270 outputs the command value calculated above (limit value of the rotation speed) as a command value of the anode gas circulation flow rate to the anode circulation pump 36. The anode circulation pump 36 gradually decreases the rotation speed on the basis of this command value. The anode circulation pump 36 can effectively reduce/suppress a situation where the electrolyte membranes 111 of the fuel cells 10 in the fuel cell stack 1 become wet, which is a state opposite to the one intended by the control, in the transient state of the dry operation by controlling the target value of the anode gas circulation flow rate by a small stepwise (or having a seamless gradient) command value instead of controlling this target value by a relatively large step-like command value.

Subsequently, the target cooling water temperature calculating unit 262 calculates a target value of the cooling water temperature for setting the cooling water temperature for cooling the fuel cell stack 1 (hereinafter, referred to as a "target cooling water temperature"). In the present embodiment, the cooling water temperature is the physical quantity having a third highest priority in the dry operation. The target cooling water temperature calculating unit 262 calculates the target cooling water temperature on the basis of the target water balance, the measured cathode gas pressure, the estimated value of the anode gas circulation flow rate and the minimum cathode gas flow rate.

Specifically, the target cooling water temperature calculating unit 262 obtains the estimated value of the anode gas circulation flow rate estimated by the operating state detecting unit 220 on the basis of the operating state of the anode gas supplying/discharging device 3 (hereinafter, referred to as an "estimated anode gas circulation flow rate"). Then, the target cooling water temperature calculating unit 262 calculates the target cooling water temperature on the basis of the target water balance, the measured cathode gas pressure, the estimated anode gas circulation flow rate and the minimum cathode gas flow rate. The target cooling water temperature calculating unit 262 outputs the calculated target cooling water temperature to the cooling water temperature limiting unit 280.

The cooling water temperature limiting unit 280 determines whether or not it is possible to achieve the target water balance in the controls of the physical quantities having a higher priority than the cooling water temperature, i.e. in the controls of the cathode gas pressure and the anode gas circulation flow rate. If it is determined that the target water balance cannot be achieved, the cooling water temperature limiting unit 280 calculates a limit value for limiting the change rate per unit control time (10 msec. in the present embodiment) of the cooling water temperature. Specifically, the cooling water temperature limiting unit 280 calculates the limit value for limiting the change rate per unit control time (10 msec. in the present embodiment) of the cooling water temperature on the basis of the current cooling water temperature (see FIG. 4) detected by the operating state detecting unit 220 and the target cooling water temperature obtained from the target cooling water temperature calculating unit 262.

The cooling water temperature limiting unit 280 outputs the above calculated command value (limit value of the rotation speed) as a command value for the cooling water temperature to the cooling water pump 42. The cooling water pump 42 gradually decreases the rotation speed on the basis of this command value. By controlling the target value of the cooling water temperature by a small stepwise (or having a seamless gradient) command value instead of controlling this target value by a relatively large step-like command value in this way, it can be effectively reduced/suppressed that the electrolyte membranes 111 of the fuel cells 10 in the fuel cell stack 1 become wet, which is a state opposite to the one intended by the control, in the transient state of the dry operation.

It should be noted that, when it is determined that the target water balance can be achieved, the cooling water temperature limiting unit 280 calculates the rotation speed of the cooling water pump 42 on the basis of the target cooling water temperature calculated by the target cooling water temperature calculating unit 262 without calculating the limit value of the change rate of the cooling water temperature, and outputs the calculated rotation speed as a command value to the cooling water pump 42.

Further, in the present embodiment, the rotation speed of the cooling water pump 42 is used as a parameter to control the cooling water temperature (stack inlet water temperature or stack outlet water temperature). However, if necessary, the opening degree of each nozzle of the three-way valve 45, the rotation speed of the radiator fan 48 and the like may also be utilized as parameters.

Subsequently, the target cathode gas flow rate calculating unit 263 calculates a target value of the flow rate of cathode gas for setting the flow rate of the cathode gas to be supplied to the fuel cell stack 1 (hereinafter, referred to as a "target cathode gas flow rate"). In the present embodiment, the cathode gas flow rate is the physical quantity having a fourth highest (i.e. lowest) priority in the dry operation. The target cathode gas flow rate calculating unit 263 calculates the target cathode gas flow rate on the basis of the target water balance, the measured cathode gas pressure, the estimated anode gas circulation flow rate and the measured value of the cooling water temperature.

Specifically, the target cathode gas flow rate calculating unit 263 obtains the measured value of the cooling water temperature obtained/calculated by the operating state detecting unit 220 (hereinafter, referred to as a "measured cooling water temperature"). Then, the target cathode gas flow rate calculating unit 263 calculates the target cathode gas flow rate on the basis of the target water balance, the measured cathode gas pressure, the estimated anode gas circulation flow rate and the measured cooling water temperature. The target cathode gas flow rate calculating unit 263 calculates a target rotation speed of the compressor 22 on the basis of the calculated target cathode gas flow rate and controls the manipulation of the compressor 22 on the basis of the calculated target rotation speed.

Next, a state change of each physical quantity in the dry operation of the fuel cell system 100 is described. First, the manipulation of a conventional fuel cell system not including the anode gas circulation flow rate limiting unit 270 and the cooling water temperature limiting unit 280 of the present embodiment is described.

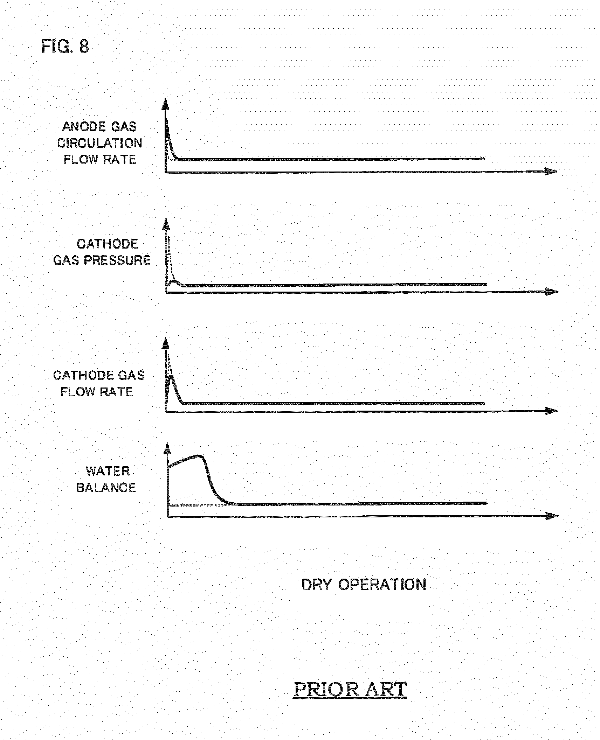

FIG. 8 is time charts showing a state change of each physical quantity during a dry operation in the conventional fuel cell system. It should be noted that, in FIG. 8, a dotted line indicates a command value and a solid line indicates an actual value. Further, a time chart of the cooling water temperature having a higher priority than the anode gas circulation flow rate is omitted in FIG. 8.

In this case, since the command value of the anode gas circulation flow rate changes in a step-like manner, the rotation speed of the anode circulation pump 36 is suddenly reduced. This causes the anode gas circulation flow rate to suddenly decrease. Thus, the cathode gas pressure and the cathode gas flow rate catch up with the command values halfway through, decrease following the command values thereafter without almost increasing with respect to initial command values, and finally reach a steady state.

However, due to a sudden decrease of the anode gas circulation flow rate, the amount of moisture flowing into the fuel cell stack 1 becomes more than the amount of moisture discharged from the fuel cell stack 1 in a transient state. Then, as shown, the water balance increases in the transient state although it needs to be reduced on the basis of the target water balance.

Specifically, the fuel cells 10 of the fuel cell stack 1 transiently become excessively wet and water is clogged near the exits of the anode gas flow passages 121, thereby creating a possibility that the anode gas (hydrogen) in the fuel cells 10 lacks.

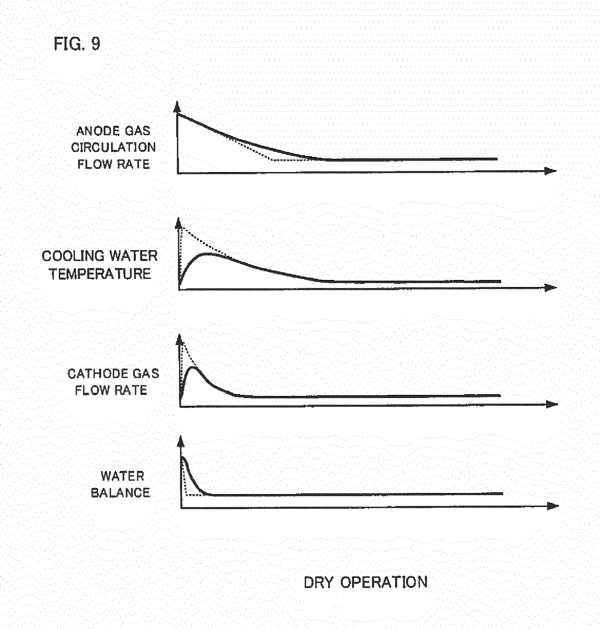

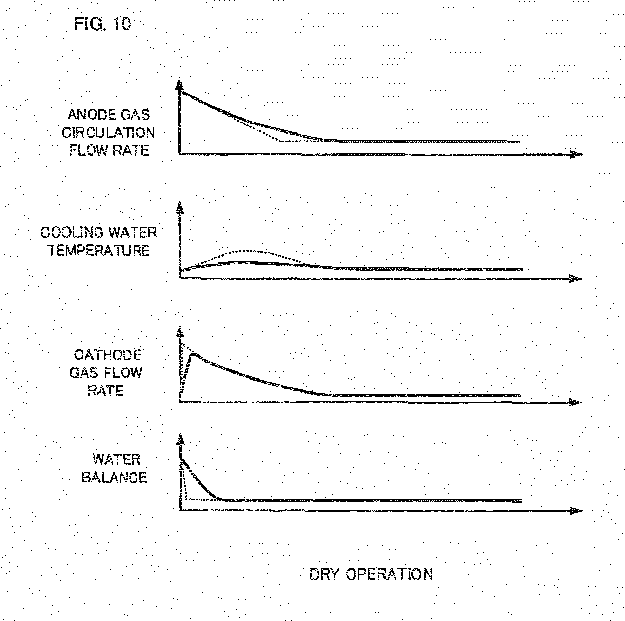

Next, the state change of each physical quantity during the dry operation in the fuel cell system 100 of the present embodiment is described. Here, each of a case where only the anode gas circulation flow rate limiting unit 270 limits the change rate of the physical quantity (see FIG. 9) and a case where both the anode gas circulation flow rate limiting unit 270 and the cooling water temperature limiting unit 280 limit the change rates of the physical quantities (see FIG. 10) is described.

FIG. 9 is time charts showing the state change of each physical quantity during the dry operation when the change rate of the anode gas circulation flow rate was limited. It should be noted that, in FIG. 9, a dotted line indicates a command value and a solid line indicates an actual value. Further, a time chart of the cathode gas pressure is omitted in FIG. 9.

First, the opening degree of the cathode pressure control valve 26 is increased on the basis of an unillustrated command value of the cathode gas pressure. Since the change rate of the anode gas circulation flow rate is limited, the command value of the anode gas circulation flow rate slowly decreases. Thus, the rotation speed of the anode circulation pump 36 gradually decreases on the basis of the command value of the change rate limit. Further, since the target water balance cannot be reached only by controlling the anode gas circulation flow rate due to the limitation of the change rate, the cooling water temperature is subsequently controlled and the cathode gas flow rate is further controlled. The cooling water temperature and the cathode gas flow rate catch up with the command values halfway through without increasing to the initial command values, decrease following the command values thereafter, and finally reach the steady states.

On the other hand, the anode gas circulation flow rate decreases at an even slower speed in the middle of the control and finally reaches the steady state. By executing such a control, the water balance does not reach the step-like initial command value in a short time as shown, but reliably decreases without increasing in a direction opposite to the control direction (decreasing direction). As just described, since the water balance is not controlled in the direction opposite to the control direction according to the control shown in FIG. 9, the lack of the anode gas as before can be prevented.

FIG. 10 is time charts showing the state change of each physical quantity during the dry operation when the change rates of the anode gas circulation flow rate and the cooling water temperature were limited. It should be noted that, in FIG. 10, a dotted line indicates a command value and a solid line indicates an actual value. Further, in FIG. 10, a time chart of the cathode gas pressure is omitted as in FIG. 9.

First, the opening degree of the cathode pressure control valve 26 is increased on the basis of an unillustrated command value of the cathode gas pressure. Since the change rate of the anode gas circulation flow rate is limited, the command value of the anode gas circulation flow rate slowly decreases. Thus, the rotation speed of the anode circulation pump gradually decreases on the basis of the command value for limiting the change rate.

Since the target water balance cannot be reached only by controlling the anode gas circulation flow rate in this example, the cooling water temperature and the cathode gas flow rate are controlled, but the change rate of the cooling water temperature is also limited. Thus, as shown, the command value of the cooling water temperature gradually increases, decreases after increasing to a certain extent and reaches the steady state. The command value of the rotation speed of the cooling water pump 42 gradually increases to correspond to the command value of the cooling water temperature and decreases in the middle of the control.

Since having low control responsiveness, the cooling water temperature reaches the steady state without following the command value. Further, the cathode gas flow rate catches up with the command value halfway through without increasing to the initial command value, decreases following the command value thereafter, and finally reaches the steady state.

In this example, it takes somewhat longer time until the water balance reaches the target water balance as compared to the control shown in FIG. 9. However, since it can be reliably prevented that the water balance is controlled in the direction opposite to the control direction, the lack of the anode gas as before can be reliably prevented.

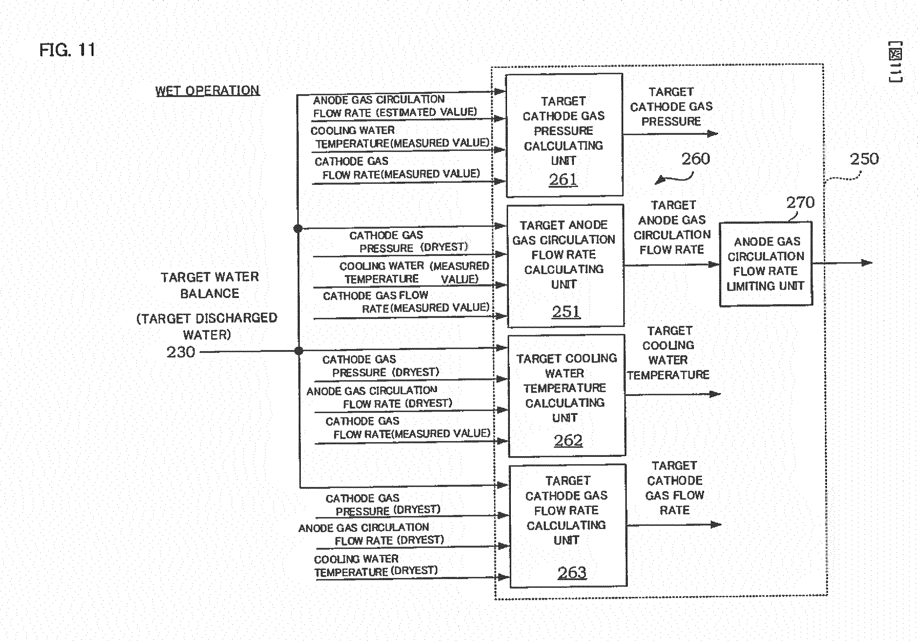

Next, the functions of the control quantity compensating unit 260 of the controller 200 in the case of the wet operation are described. FIG. 11 is a diagram showing an example of a functional configuration in the wet operation of the control quantity compensating unit 260 shown in FIG. 4. Here, control parameters when the wet operation is performed by the controller 200 are shown. As shown in FIG. 11, the anode gas circulation flow rate control unit 250 includes the target anode gas circulation flow rate calculating unit 251. Further, the control quantity compensating unit 260 includes the target cathode gas calculating unit 261, the target cooling water temperature calculating unit 262 and the target cathode gas flow rate calculating unit 263 as in the case of the dry operation.

In the present embodiment, the priority levels of control targets are set in a decreasing order from bottom of FIG. 11 in the wet operation by the priority setting unit 240 as described above. A target control quantity corresponding to each calculating unit 261 to 263, 251 is calculated below in a decreasing order of the priority.

First, the wet/dry state control unit 230 obtains the degree of wetness data of the electrolyte membranes 111 detected by the wet/dry state detecting unit 210 and the operation data relating to the degree of wetness detected by the operating state detecting unit 220, calculates the current water balance and calculates the target water balance. The calculated target water balance is output to each of the target cathode gas pressure calculating unit 261, the target anode gas circulation flow rate calculating unit 251, the target cooling water temperature calculating unit 262 and the target cathode gas flow rate calculating unit 263.

Subsequently, the target cathode gas flow rate calculating unit 263 calculated the target cathode gas flow rate for setting the flow rate of the cathode gas to be supplied to the fuel cell stack 1. In the present embodiment, the cathode gas flow rate is the physical quantity having a highest priority in the wet operation.

The target cathode gas flow rate calculating unit 263 calculates the target cathode gas flow rate on the basis of the target water balance and rated values of each pump/compressor stored in advance in the unillustrated memory of the controller 200 when a driest operation is performed (hereinafter, referred to as "driest operation rated values"). The driest operation rated values are command values when the driest operation is performed in the fuel cell system 100 and include a cathode gas pressure (hereinafter, referred to as a "driest cathode gas pressure"), an anode gas circulation flow rate (hereinafter, referred to as a "driest anode gas circulation flow rate) and a cooling water temperature (hereinafter, referred to as a "driest cooling water temperature") during the driest operation. As just described, in the case of calculating the physical quantity having a highest priority, the controls for the other physical quantities are set not to contribute to the wet operation at all.

Specifically, the target cathode gas flow rate calculating unit 263 calculates the target cathode gas flow rate on the basis of the target water balance, the driest cathode gas pressure, the driest anode gas circulation flow rate and the driest cooling water temperature. Then, the target cathode gas flow rate calculating unit 263 calculates a target rotation speed of the compressor 22 on the basis of the calculated target cathode gas flow rate and controls the manipulation of the compressor 22 on the basis of the calculated target rotation speed.

The target cathode gas flow rate calculating unit 263 sets a lower rotation speed of the compressor 22 to increase the degree of wetness (moisture) of the electrolyte membranes 111 as the target water balance increases. In this way, the moisture discharged from the fuel cell stack 1 decreases.

Subsequently, the target cooling water temperature calculating unit 262 calculates the target cooling water temperature for setting the cooling water temperature for cooling the fuel cell stack 1. In the present embodiment, the cooling water temperature is the physical quantity having a second highest priority. The target cooling water temperature calculating unit 262 calculates the target cooling water temperature on the basis of the target water balance, the driest cathode gas pressure, the driest anode gas circulation flow rate and the measured value of the cathode gas flow rate (hereinafter, referred to as a "measured cathode gas flow rate"). In this way, as the priority becomes lower, a target value is calculated using an actually measured value, an estimated value or the like for the physical quantity having a higher priority than that of the physical quantity being currently controlled. This enables the control quantity of the wet operation (control amount of the wet/dry state) to be compensated for by the control of the physical quantity having a next highest priority when a desired water balance (degree of wetness) is not reached only by the control of the physical quantity having a high priority.

Specifically, the target cooling water temperature calculating unit 262 obtains the cathode gas flow rate detected by the flow rate sensor 23 and output to the operating state detecting unit 220 (hereinafter, referred also as a "measured cathode gas flow rate"). Then, the target cooling water temperature calculating unit 262 calculates the target cooling water temperature on the basis of the target water balance, the driest cathode gas pressure, the driest anode gas circulation flow rate and the measured cathode gas flow rate. The target cooling water temperature calculating unit 262 calculated the target rotation speed of the cooling water pump 42 on the basis of the calculated target cooling water temperature and controls the manipulation of the cooling water pump 42 on the basis of the calculated target rotation speed.

Subsequently, the target anode gas circulation flow rate calculating unit 251 calculates the target anode gas circulation flow rate for setting the circulation flow rate of the anode gas circulating in the anode gas circulation passage 35. In the present embodiment, the anode gas circulation flow rate is the physical quantity having a third highest priority in the wet operation. The target anode gas circulation flow rate calculating unit 251 calculates the target anode gas circulation flow rate on the basis of the target water balance, the driest cathode gas pressure, the measured value of the cooling water temperature and the measured cathode gas flow rate.

Specifically, the target anode gas circulation flow rate calculating unit 251 obtains the measured value of the cooling water temperature obtained/calculated by the operating state detecting unit 220 (hereinafter, referred to as a "measured cooling water temperature"). Then, the target anode gas circulation flow rate calculating unit 251 calculates the target anode gas circulation flow rate on the basis of the target water balance, the driest cathode gas pressure, the measured cooling water temperature and the measured cathode gas flow rate. The target anode gas circulation flow rate calculating unit 251 outputs the calculated target anode gas circulation flow rate to the anode gas circulation flow rate limiting unit 270.

The anode gas circulation flow rate limiting unit 270 calculates a limit value for limiting the change rate per unit control time (10 msec. in the present embodiment) of the anode gas circulation flow rate on the basis of the current anode gas circulation flow rate (see FIG. 4) detected by the operating state detecting unit 220 and the target anode gas circulation flow rate obtained from the target anode gas circulation flow rate calculating unit 251.

The anode gas circulation flow rate limiting unit 270 outputs the command value calculated above (limit value of the rotation speed) as a command value of the anode gas circulation flow rate to the anode circulation pump 36. The anode circulation pump 36 gradually increases the rotation speed on the basis of this command value. In this way, it can be effectively reduced/suppressed that the electrolyte membranes 111 of the fuel cells 10 in the fuel cell stack 1 become wet, which is a state opposite to the one intended by the control, in the transient state of the wet operation by controlling the target value of the anode gas circulation flow rate by a small stepwise (or having a seamless gradient) command value instead of controlling this target value by a relatively large step-like command value. This can effectively suppress a possibility of breaking or degrading the electrolyte membranes 111 in the fuel cells 10.

Subsequently, the target cathode gas pressure calculating unit 261 calculates the target cathode gas pressure for setting the pressure of the cathode gas to be supplied to the fuel cell stack 1. In the present embodiment, the cathode gas pressure is the physical quantity having a fourth highest (i.e. lowest) priority in the wet operation. The target cathode gas pressure calculating unit 261 calculates the target cathode gas pressure on the basis of the target water balance, the estimated value of the anode gas circulation flow rate, the measured cooling water temperature and the measured cathode gas flow rate.

Specifically, the target cathode gas pressure calculating unit 261 obtains the estimated value of the anode gas circulation flow rate estimated by the operating state detecting unit 220 on the basis of the operating state of the anode gas supplying/discharging device 3 (hereinafter, referred to as an "estimated anode gas circulation flow rate"). Then, the target cathode gas pressure calculating unit 261 calculates the target cathode gas pressure on the basis of the target water balance, the estimated anode gas circulation flow rate, the measured cooling water temperature and the measured cathode gas flow rate. The target cathode gas pressure calculating unit 261 calculates a target opening degree of the cathode pressure control valve 26 on the basis of the calculated target cathode gas pressure and controls the opening/closing of the cathode pressure control valve 26 on the basis of the calculated target opening degree.

In this example, since only the cathode gas pressure is the physical quantity having a lower priority than the anode gas circulation flow rate in the wet operation, the change rate of the cathode gas pressure is not limited. In increasing the moisture in the fuel cell stack 1 by the wet operation, a sudden manipulation of the anode circulation pump 36 particularly easily causes a transient problem. Thus, in the present embodiment, only the physical quantity that has a lower priority than the anode gas circulation flow rate and does not adversely affect the control of the water balance is limited.

Next, a state change of each physical quantity in the wet operation of the fuel cell system 100 is described. First, the manipulation of a conventional fuel cell system not including the anode gas circulation flow rate limiting unit 270 of the present embodiment is described.

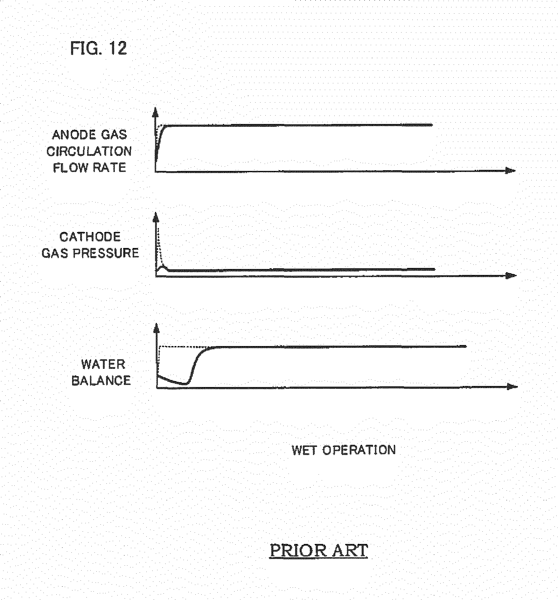

FIG. 12 is time charts showing a state change of each physical quantity during a wet operation in the conventional fuel cell system. It should be noted that, in FIG. 12, a dotted line indicates a command value and a solid line indicates an actual value. Further, time charts of the cathode gas flow rate and the cooling water temperature having a higher priority than the anode gas circulation flow rate are omitted in FIG. 12.

In this case, since the command value of the anode gas circulation flow rate changes in a step-like manner, the rotation speed of the anode circulation pump 36 is suddenly increased. This causes the anode gas circulation flow rate to suddenly increase. Thus, the cathode gas pressure catches up with the command value halfway through and decreases, following the command value thereafter, without almost increasing with respect to an initial command value, and finally reaches a steady state.

However, due to a sudden increase of the anode gas circulation flow rate, the amount of moisture discharged from the fuel cell stack 1 becomes more than the amount of moisture flowing into the fuel cell stack 1 in a transient state. Then, as shown, the water balance decreases in the transient state although it needs to be increased on the basis of the target water balance.

Specifically, the fuel cells 10 of the fuel cell stack 1 transiently become excessively dry, thereby creating a possibility of breaking or degrading the electrolyte membranes 111 in the fuel cells 10.

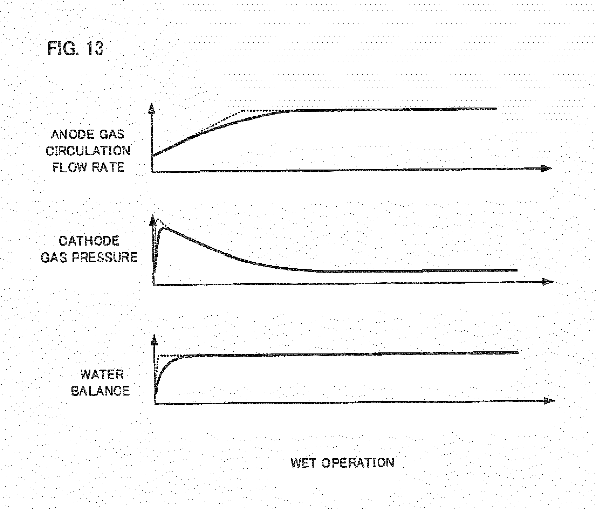

Next, the state change of each physical quantity in the wet operation of the fuel cell system 100 of the present embodiment is described. FIG. 13 is time charts showing the state change of each physical quantity during the wet operation when the change rate of the anode gas circulation flow rate was limited. It should be noted that, in FIG. 13, a dotted line indicates a command value and a solid line indicates an actual value. Further, time charts of the cathode gas flow rate and the cooling water temperature are omitted in FIG. 13.

First, the rotation speed of the compressor 22 decreases on the basis of an unillustrated command value of the cathode gas flow rate. Further, the rotation speed of the cooling water pump 42 increases on the basis of an unillustrated command value of the cooling water temperature. Since the change rate of the anode gas circulation flow rate is limited, the command value of the anode gas circulation flow rate slowly increases. Thus, the rotation speed of the anode circulation pump 36 gradually increases on the basis of the command value for limiting the change rate.

In this example, since the target water balance cannot be reached only by the control of the anode gas circulation flow rate due to the limitation of the change rate, the cathode gas pressure is controlled. The cathode gas pressure increases to the vicinity of the initial command value and catches up with the command value, decreases following the command value thereafter, and finally reaches the steady state.

On the other hand, the anode gas circulation flow rate increases at an even faster speed in the middle of the control and finally reaches the steady state. By executing such a control, the water balance does not reach the step-like initial command value in a short time as shown, but reliably increases without decreasing in a direction opposite to a control direction. As just described, since the water balance is not controlled in the direction opposite to the control direction according to the control shown in FIG. 13, a possibility of breaking or degrading the electrolyte membranes 111 as before can be effectively suppressed.

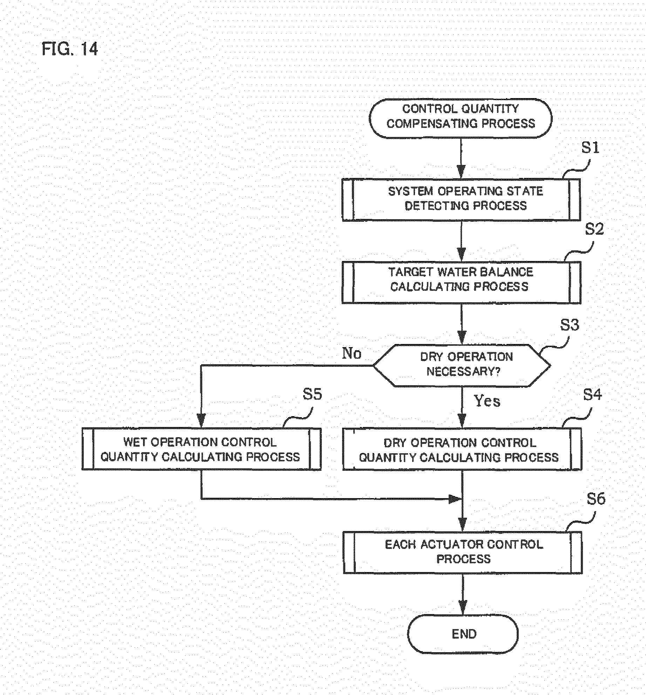

Next, the manipulation of the fuel cell system 100 of the present embodiment is described using flow charts shown in FIGS. 14 to 26. FIG. 14 is a flow chart showing an example of the control quantity compensating process performed by the controller 200 in the present embodiment. This control quantity compensating process is performed, for example, every 10 msec. by the controller 200 of the fuel cell system 100 as described above. It should be noted that a sequence of Steps of each flow chart may be changed within a non-contradictory range.

In this control quantity compensating process, the operating state detecting unit 220 of the controller 200 performs a system operating state detecting process for detecting an operating state of the entire fuel cell system 100 (Step S1). Then, the wet/dry state control unit 230 of the controller 200 performs a target water balance calculating process for calculating the target water balance on the basis of the operating state of the fuel cell system 100 (Step S2).

Subsequently, the wet/dry state control unit 230 of the controller 200 determines whether or not the dry operation is necessary for the fuel cell stack 1 on the basis of the water balance obtained in Step S2 and the current water balance calculated according to the operation data relating to the degree of wetness obtained from the wet/dry state detecting unit 210 (Step S3).

If the dry operation for the fuel cell stack 1 is determined to be necessary, the controller 200 performs a dry operation control quantity calculating process for calculating the control quantity of each physical quantity during the dry operation (Step S4). On the other hand, if it is determined that the dry operation is not necessary, but the wet operation is necessary for the fuel cell stack 1, the controller 200 performs a wet operation control quantity calculating process for calculating the control quantity of each physical quantity during the wet operation (Step S5).

Subsequently, the controller 200 performs each actuator control process for controlling each of the compressor 22, the cathode pressure control valve 26, the anode circulation pump 36 and the cooling water pump 42 serving as actuators in controlling the water balance on the basis of the calculation result in Step S4 or S5 (Step S6) and ends this control quantity compensating process. It should be noted that since each actuator control process, which is a subroutine of the control quantity compensating process, is described above using FIGS. 7 and 11, it is neither illustrated in a flow chart nor described. Other subroutines are described in detail below.

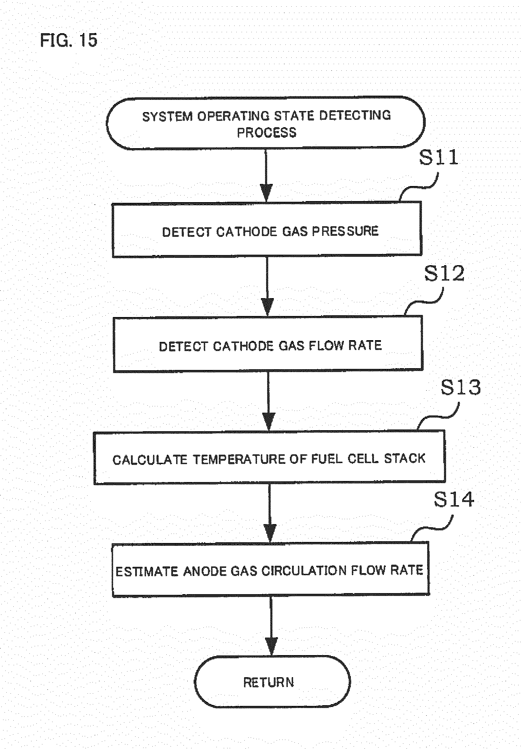

FIG. 15 is a flow chart showing an example of the system operating state detecting process, which is a subroutine corresponding to Step S1 of the control quantity compensating process. In this system operating state detecting process, the operating state detecting unit 220 detects the pressure of the cathode gas using the pressure sensor 24 (Step S11) and detects the flow rate of the cathode gas using the flow rate sensor 23 (Step S12).

Subsequently, the operating state detecting unit 220 calculates the stack temperature (cooling water temperature) of the fuel cell stack 1 (Step S13). As described above, the operating state detecting unit 220 obtains the stack inlet water temperature and the stack outlet water temperature from the inlet water temperature sensor 46 and the outlet water temperature sensor 47 and calculates the stack temperature of the fuel cell stack 1, i.e. the aforementioned cooling water temperature by calculating an average value of the stack inlet water temperature and the stack outlet water temperature.

Subsequently, the operating state detecting unit 220 estimates the anode gas circulation flow rate on the basis of the rotation speed of the anode circulation pump 36, the anode gas pressure detected by the pressure sensor 37 and the stack temperature (Step S14). Then, the operating state detecting unit 220 ends this system operating state detecting process and returns to the main flow of the control quantity compensating process. As described above, the anode gas circulation flow rate is estimated as a flow rate in a standard state on the basis of the stack temperature of the fuel cell stack 1 and the pressure of the anode gas in the anode gas circulation passage 35 detected by the pressure sensor 37.

The operating state detecting unit 220 outputs various physical quantities detected/calculated/estimated in this way to the wet/dry state control unit 230 and the anode gas circulation flow rate control unit 250. It should be noted that the operating state detecting unit 220 calculates the output power of the fuel cell system 100 on the basis of the stack output current detected by the current sensor 51 and the stack output voltage detected by the voltage sensor 52. These controls are not further described since being not related to the control of the present embodiment very much.

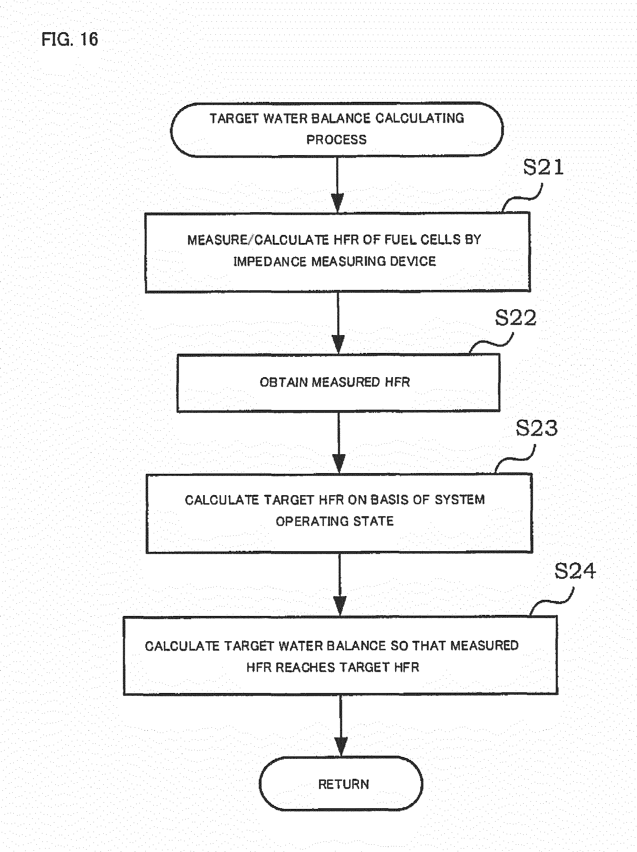

FIG. 16 is a flow chart showing an example of the target water balance calculating process, which is a subroutine corresponding to Step S2 of the control quantity compensating process. In this target water balance calculating process, the wet/dry state detecting unit 210 first causes the impedance measuring device 6 to measure/calculate the HFR of the fuel cell stack 1 (Step S21). The impedance measuring device 6 measures the internal impedance of the fuel cell stack 1 as described above and outputs the measured internal impedance (measured HFR) to the wet/dry state detecting unit 210. Then, the wet/dry state control unit 230 obtains the measured HFR via the wet/dry state detecting unit 210 (Step S22).

Subsequently, the wet/dry state control unit 230 calculates the target HFR on the basis of the operating state of the fuel cell system 100 obtained from the operating state detecting unit 220 (Step S23). The wet/dry state control unit 230 calculates the target water balance so that the measured HFR obtained in Step S22 reaches the target HFR calculated in Step S23 (Step S24). Then, the wet/dry state control unit 230 ends this target water balance calculating process and returns to the main flow of the control quantity compensating process.

It should be noted that if the measured HFR is larger than the target HFR, the electrolyte membranes 111 in the fuel cells 10 tend to be drier than at the target value. Thus, the wet/dry state control unit 230 sets the target water balance so that the wet operation is performed. On the other hand, if the measured HFR is smaller than the target HFR, the electrolyte membranes in the fuel cells 10 tend to be wetter than at the target value. Thus, the wet/dry state control unit 230 sets the target water balance so that the dry operation is performed.

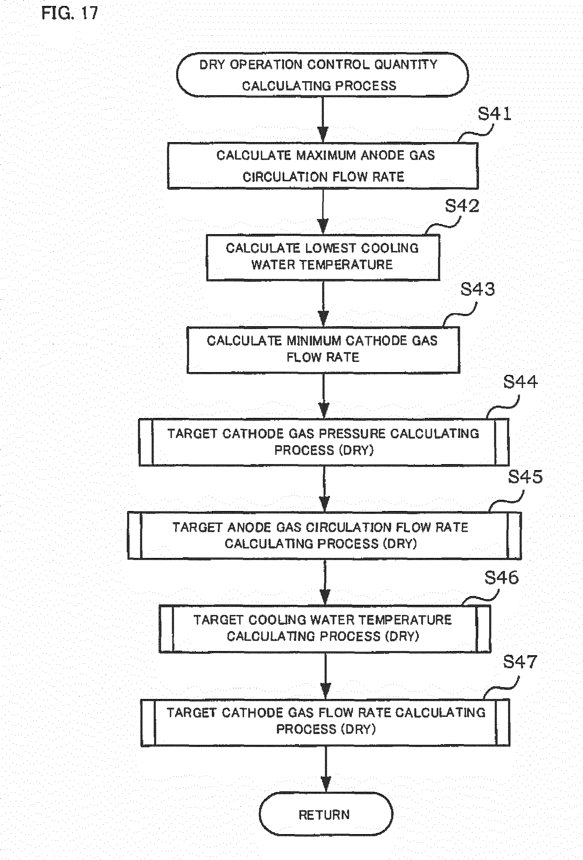

FIG. 17 is a flow chart showing an example of the dry operation control quantity calculating process, which is a subroutine corresponding to Step S4 of the control quantity compensating process. If it is determined in Step S3 of the control quantity compensating process that the dry operation is necessary for the fuel cell stack 1, this dry operation control quantity calculating process is performed. It should be noted that the dry operation control quantity calculating process is performed mainly by the anode gas circulation flow rate control unit 250, the control quantity compensating unit 260, the anode gas circulation flow rate limiting unit 270 and the cooling water temperature limiting unit 280.

In this dry operation control quantity calculating process, the anode gas circulation flow rate control unit 250 calculates the maximum anode gas circulation flow rate on the basis of the operating state of the fuel cell system 100 detected by the operating state detecting unit 220 (Step S41). It should be noted that the maximum anode gas circulation flow rate may be set in advance on the basis of the system design of the fuel cell system 100, a rated output of each pump and the like and stored in the unillustrated memory.

Subsequently, the control quantity compensating unit 260 calculates the minimum cooling water temperature on the basis of the operating state of the fuel cell system 100 detected by the operating state detecting unit 220 (Step S42). It should be noted that the minimum cooling water temperature may be an ambient temperature (outside air temperature) of the fuel cell system 100 detected by an unillustrated temperature sensor or may be set in advance on the basis of the system design of the fuel cell system 100, the rated output of each pump and the like and stored in the unillustrated memory.

Subsequently, the control quantity compensating unit 260 calculates the minimum cathode gas flow rate on the basis of the operating state of the fuel cell system 100 detected by the operating state detecting unit 220 (Step S43). It should be noted that the minimum cathode gas flow rate may be set in advance on the basis of the system design of the fuel cell system 100, a rated output of each pump and the like and stored in the unillustrated memory.

Subsequently, the control quantity compensating unit 260 performs a target cathode gas pressure calculating process (dry) on the basis of the maximum anode gas circulation flow rate, the minimum cooling water temperature and the minimum cathode gas flow rate calculated in Steps S41 to S43 (Step S44). Then, the anode gas circulation flow rate control unit 250 performs a target anode gas circulation flow rate calculating process (dry) on the basis of the minimum cooling water temperature, the minimum cathode gas flow rate and the like (Step S45).

Subsequently, the control quantity compensating unit 260 performs a target cooling water temperature calculating process (dry) on the basis of the minimum cathode gas flow rate and the like (Step S46). Finally, the control quantity compensating unit 260 performs a target cathode gas flow rate calculating process (dry) on the basis of various measured values and estimated values (Step S47). Then, the anode gas circulation flow rate control unit 250 and the control quantity compensating unit 260 end this dry operation control quantity calculating process and returns to the main flow of the control quantity compensating process.

It should be noted that a sequence of Steps S44 to S47 of the dry operation control quantity calculating process is set on the basis of the priority of each physical quantity set by the priority setting unit 240. Thus, the sequence of these Steps should not be changed.

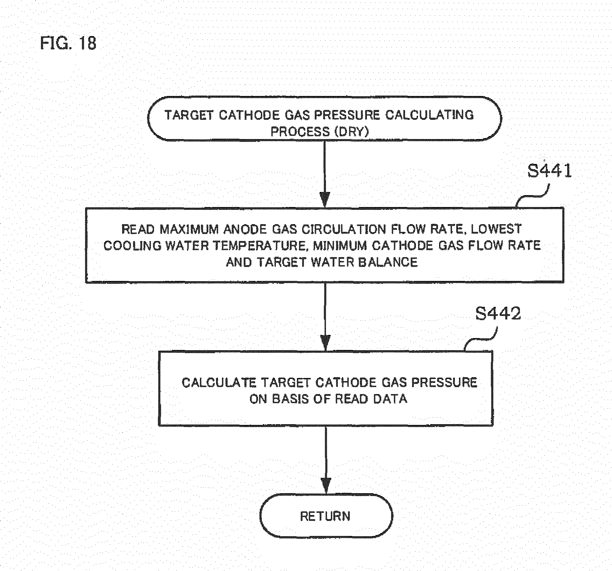

FIG. 18 is a flow chart showing an example of the target cathode gas pressure calculating process (dry), which is a subroutine corresponding to Step S44 of the dry operation control quantity calculating process. When the maximum anode gas circulation flow rate, the minimum cooling water temperature and the minimum cathode gas flow rate are calculated until Step S43 of the dry operation control quantity calculating process, the control quantity compensating unit 260 performs this target cathode gas pressure calculating process (dry).

The control quantity compensating unit 260 first reads the maximum anode gas circulation flow rate, the minimum cooling water temperature and the minimum cathode gas flow rate calculated in Steps S41 to S43 of the dry operation control quantity calculating process and the target water balance calculated in Step S24 of the target water balance calculating process (Step S441). These pieces of data are stored in the unillustrated memory if necessary.

Subsequently, the control quantity compensating unit 260 calculates the target cathode gas pressure on the basis of various pieces of read data (Step S442). Then, the control quantity compensating unit 260 ends this target cathode gas pressure calculating process (dry) and returns to the main flow of the dry operation control quantity calculating process.

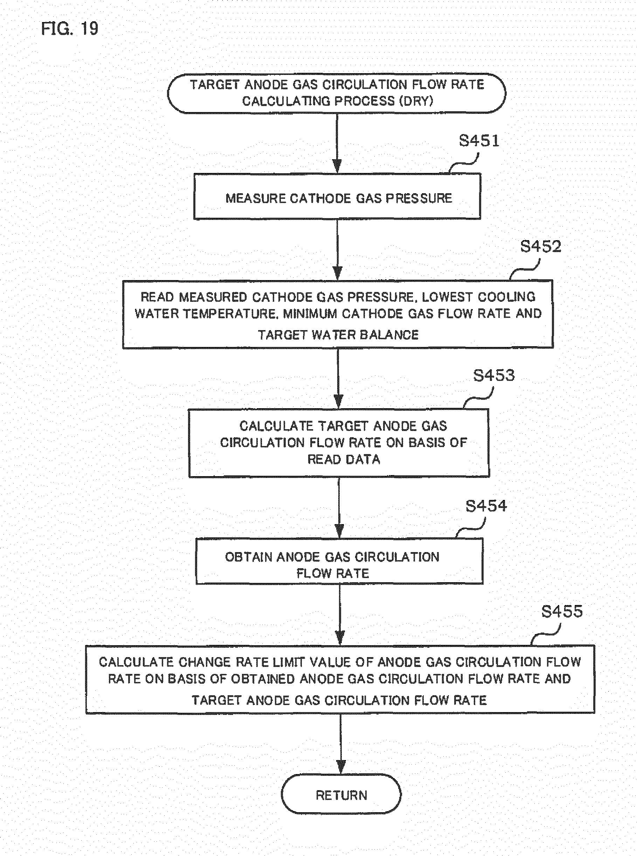

FIG. 19 is a flow chart showing an example of the target anode gas circulation flow rate calculating process (dry), which is a subroutine corresponding to Step S45 of the dry operation control quantity calculating process. The anode gas circulation flow rate control unit 250 performs this target anode gas circulation flow rate calculating process (dry) after the end of the target cathode gas pressure calculating process (dry).

The anode gas circulation flow rate control unit 250 first obtains (measures) the cathode gas pressure detected by the pressure sensor 24 (Step S451). Then, the anode gas circulation flow rate control unit 250 reads the cathode gas pressure obtained in Step S451, the minimum cooling water temperature and the minimum cathode gas flow rate calculated in Steps S42 and S43 and the target water balance calculated in Step S24 (Step S452). These pieces of data are stored in the unillustrated memory if necessary.

Subsequently, the anode gas circulation flow rate control unit 250 calculates the target anode gas circulation flow rate on the basis of various pieces of read data (Step S453). Further, the anode gas circulation flow rate control unit 250 obtains the current anode gas circulation flow rate estimated by the operating state detecting unit 220 on the basis of the rotation speed of the anode circulation pump 36, the anode gas pressure detected by the pressure sensor 37 and the stack temperature (Step S454).

Subsequently, the anode gas circulation flow rate limiting unit 270 calculates the limit value of the change rate of the anode gas circulation flow rate on the basis of the obtained current anode gas circulation flow rate and the target anode gas circulation flow rate (Step S455). It should be noted that the method for calculating the limit value of the change rate is not described in detail here since having been described in detail above.

Then, the anode gas circulation flow rate control unit 250 ends this target anode gas circulation flow rate calculating process (dry) and returns to the main flow of the dry operation control quantity calculating process.

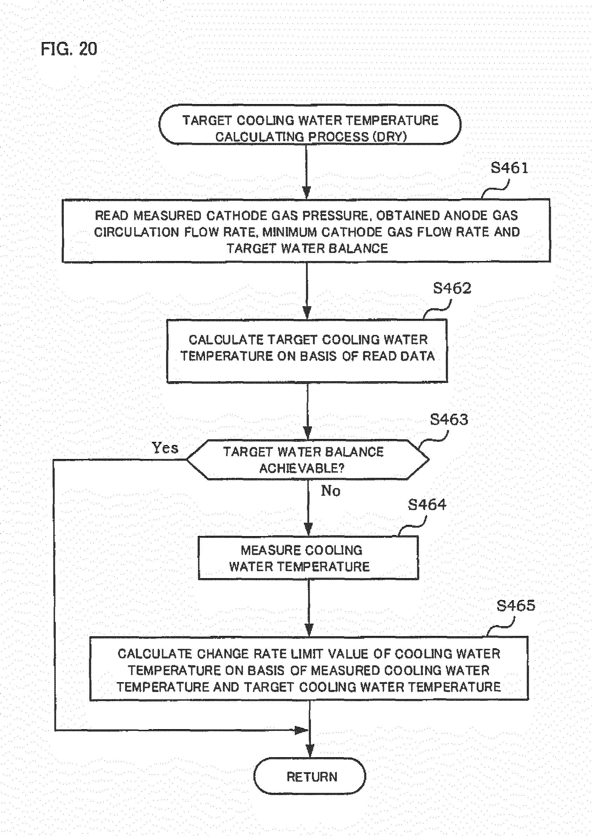

FIG. 20 is a flow chart showing an example of the target cooling water temperature calculating process (dry), which is a subroutine corresponding to Step S46 of the dry operation control quantity calculating process. The control quantity compensating unit 260 performs this target cooling water temperature calculating process (dry) after the end of the target cathode gas pressure calculating process (dry) and the target anode gas circulation flow rate calculating process (dry).

The control quantity compensating unit 260 first reads the cathode gas pressure measured in Step S451, the anode gas circulation flow rate obtained in Step S454, the minimum cathode gas flow rate calculated in Step S43 and the target water balance calculated in Step S24 (Step S461). Then, the control quantity compensating unit 260 calculates the target cooling water temperature on the basis of various pieces of read data (Step S462).

Subsequently, the control quantity compensating unit 260 determines on the basis of the limit value of the change rate of the anode gas circulation flow rate calculated in Step S455, the target water balance and the like whether or not the target water balance can be achieved even if the anode gas circulation flow rate is limited (Step S463). If it is determined that the target water balance can be achieved, the control quantity compensating unit 260 directly ends this target cooling water temperature calculating process (dry) and returns to the main flow of the dry operation control quantity calculating process.

On the other hand, if it is determined that the target water balance cannot be achieved, the control quantity compensating unit 260 calculates/measures the current cooling water temperature on the basis of the stack inlet water temperature and the stack outlet water temperature detected by the inlet water temperature sensor 46 and the outlet water temperature sensor 47 (Step S464).

Subsequently, the cooling water temperature limiting unit 280 calculates the limit value of the change rate of the cooling water temperature on the basis of the current cooling water temperature measured in Step S464 and the target cooling water temperature calculated in Step S462 (Step S465). It should be noted that the method for calculating the limit value of the change rate is not described in detail here since having been described in detail above.

Then, the control quantity compensating unit 260 ends this target cooling water temperature calculating process (dry) and returns to the main flow of the dry operation control quantity calculating process.

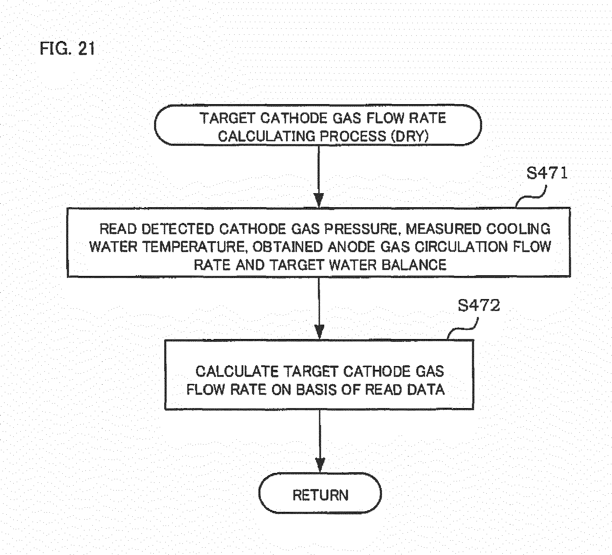

FIG. 21 is a flow chart showing an example of the target cathode gas flow rate calculating process (dry), which is a subroutine corresponding to Step S47 of the dry operation control quantity calculating process. The control quantity compensating unit 260 performs this target cathode gas flow rate calculating process (dry) after the end of the target cathode gas pressure calculating process (dry), the target anode gas circulation flow rate calculating process (dry) and the target cooling water temperature calculating process (dry).

The control quantity compensating unit 260 first reads the measured cathode gas pressure measured in Step S451, the cooling water temperature measured in Step S464, the anode gas circulation flow rate obtained in Step S454 and the target water balance calculated in Step S24 (Step S471).

The control quantity compensating unit 260 calculates the target cathode gas flow rate on the basis of various pieces of read data (Step S472). Then, the control quantity compensating unit 260 ends this target cathode gas flow rate calculating process (dry) and returns to the main flow of the dry operation control quantity calculating process.

When each target value in the dry operation is calculated in the above way, the controller 200 returns to the main flow of the control quantity compensating process, performs each actuator control process for controlling the drive of each actuator on the basis of each calculated target value (Step S6) and ends this control quantity compensating process.

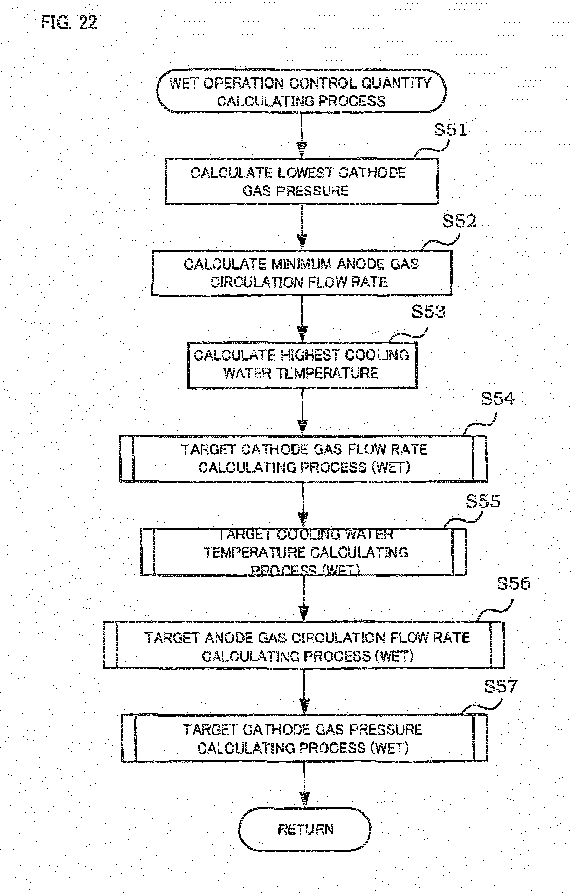

FIG. 22 is a flow chart showing an example of the wet operation control quantity calculating process, which is a subroutine corresponding to Step S5 of the control quantity compensating process. If it is determined in Step S3 of the control quantity compensating process that the wet operation is necessary for the fuel cell stack 1, this wet operation control quantity calculating process is performed. It should be noted that the wet operation control quantity calculating process is performed mainly by the anode gas circulation flow rate control unit 250, the control quantity compensating unit 260 and the anode gas circulation flow rate limiting unit 270.

In this wet operation control quantity calculating process, the control quantity compensating unit 260 calculates a lowest cathode gas pressure (i.e. driest cathode gas pressure) on the basis of the operating state of the fuel cell system 100 detected by the operating state detecting unit 220 (Step S51). It should be noted that the lowest cathode gas pressure may be set in advance on the basis of the system design of the fuel cell system 100, the rated output of each pump and the like and stored in the unillustrated memory.

Subsequently, the anode gas circulation flow rate control unit 250 calculates a minimum anode gas circulation flow rate (i.e. driest anode gas circulation flow rate) on the basis of the operating state of the fuel cell system 100 detected by the operating state detecting unit 220 (Step S52). It should be noted that the minimum anode gas circulation flow rate may be set in advance on the basis of the system design of the fuel cell system 100, the rated output of each pump and the like and stored in the unillustrated memory.

Subsequently, the control quantity compensating unit 260 calculates a maximum cooling water temperature (i.e. driest cooling water temperature) on the basis of the operating state of the fuel cell system 100 detected by the operating state detecting unit 220 (Step S53). It should be noted that the maximum cooling water temperature may be an ambient temperature (outside air temperature) of the fuel cell system 100 detected by the unillustrated temperature sensor or may be set in advance on the basis of the system design of the fuel cell system 100, the rated output of each pump and the like and stored in the unillustrated memory.

Subsequently, the control quantity compensating unit 260 performs a target cathode gas flow rate calculating process (wet) on the basis of the lowest cathode gas pressure, the minimum anode gas circulation flow rate and the maximum cooling water temperature calculated in Steps S51 to S53 (Step S54). Then, the control quantity compensating unit 260 performs a target cooling water temperature calculating process (wet) on the basis of the lowest cathode gas pressure, the minimum anode gas circulation flow rate and the like (Step S55).

Subsequently, the anode gas circulation flow rate control unit 250 performs a target anode gas circulation flow rate calculating process (wet) on the basis of the lowest cathode gas pressure and the like (Step S56). Finally, the control quantity compensating unit 260 performs a target cathode gas pressure calculating process (wet) on the basis of various measured values and estimated values (Step S57). Then, the anode gas circulation flow rate control unit 250 and the control quantity compensating unit 260 end this wet operation control quantity calculating process and returns to the main flow of the control quantity compensating process.

It should be noted that a sequence of Steps S54 to S57 of the wet operation control quantity calculating process is set on the basis of the priority of each physical quantity set by the priority setting unit 240. Thus, the sequence of these Steps should not be changed.

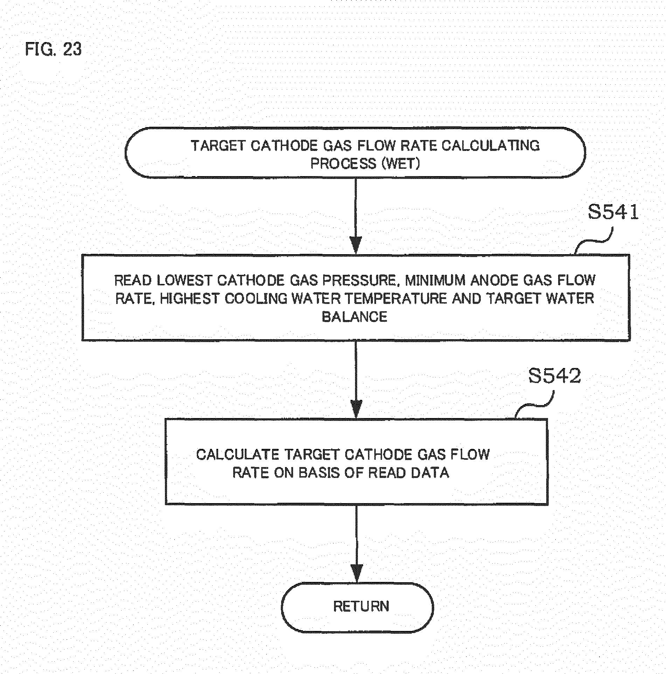

FIG. 23 is a flow chart showing an example of the target cathode gas flow rate calculating process (wet), which is a subroutine corresponding to Step S54 of the wet operation control quantity calculating process. When the lowest cathode gas pressure, the minimum anode gas circulation flow rate and the maximum cooling water temperature are calculated until Step S53 of the wet operation control quantity calculating process, the control quantity compensating unit 260 performs this target cathode gas flow rate calculating process (wet).

The control quantity compensating unit 260 first reads the lowest cathode gas pressure, the minimum anode gas circulation flow rate and the maximum cooling water temperature calculated in Steps S51 to S53 of the wet operation control quantity calculating process and the target water balance calculated in Step S24 of the target water balance calculating process (Step S541). These pieces of data are stored in the unillustrated memory if necessary.

Subsequently, the control quantity compensating unit 260 calculates the target cathode gas flow rate on the basis of various pieces of read data (Step S542). Then, the control quantity compensating unit 260 ends this target cathode gas flow rate calculating process (wet) and returns to the main flow of the wet operation control quantity calculating process.

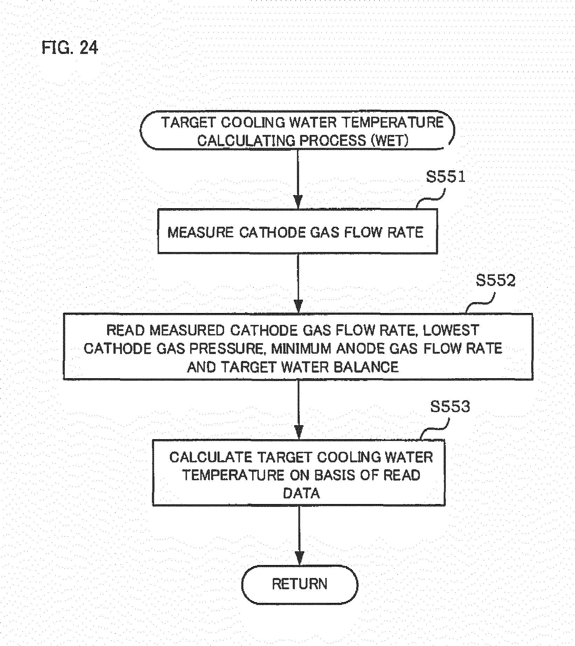

FIG. 24 is a flow chart showing an example of the target cooling water temperature calculating process (wet), which is a subroutine corresponding to Step S55 of the wet operation control quantity calculating process. The control quantity compensating unit 260 performs this target cooling water temperature calculating process (wet) after the end of the target cathode gas flow rate calculating process (wet).

The control quantity compensating unit 260 first obtains (measures) the cathode gas flow rate detected by the flow rate sensor 23 (Step S551). Then, the control quantity compensating unit 260 reads the cathode gas flow rate obtained in Step S551, the lowest cathode gas pressure and the minimum anode gas circulation flow rate calculated in Steps S51 and S52 of the wet operation control quantity calculating process, and the target water balance calculated in Step S24 of the target water balance calculating process (Step S552). These pieces of data are stored in the unillustrated memory if necessary.

Subsequently, the control quantity compensating unit 260 calculates the target cooling water temperature on the basis of various pieces of read data (Step S553). Then, the control quantity compensating unit 260 ends this target cooling water temperature calculating process (wet) and returns to the main flow of the wet operation control quantity calculating process.

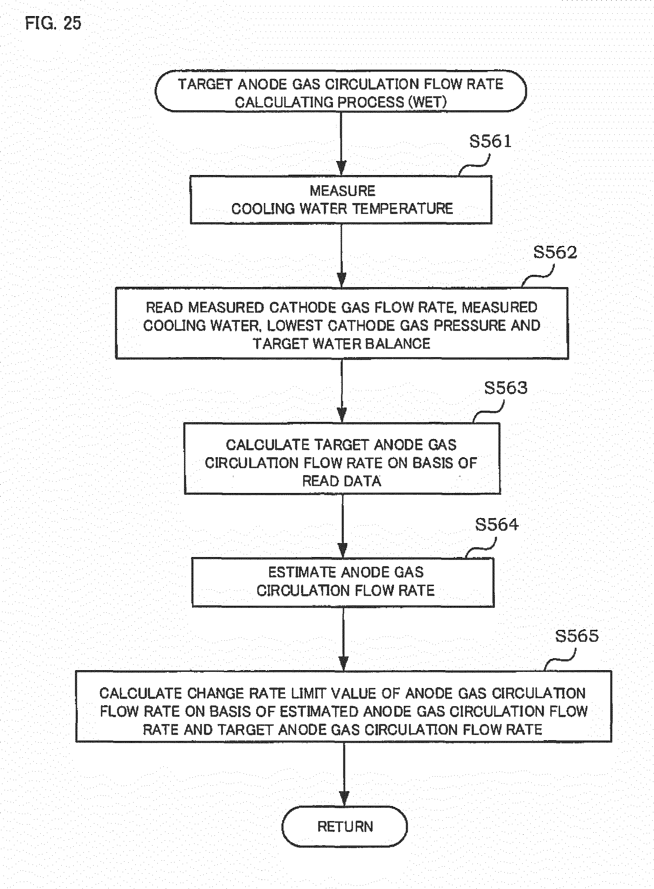

FIG. 25 is a flow chart showing an example of the target anode gas circulation flow rate calculating process (wet), which is a subroutine corresponding to Step S56 of the wet operation control quantity calculating process. The anode gas circulation flow rate control unit 250 performs this target anode gas circulation flow rate calculating process (wet) after the end of the target cathode gas flow rate calculating process (wet) and the target cooling water temperature calculating process (wet).

The anode gas circulation flow rate control unit 250 first obtains (measures) the cooling water temperature calculated on the basis of the stack inlet water temperature and the stack outlet water temperature detected by the inlet water temperature sensor 46 and the outlet water temperature sensor 47 (Step S561). Then, the anode gas circulation flow rate control unit 250 reads the cathode gas flow rate obtained in Step S551, the cooling water temperature obtained in Step S561, the lowest cathode gas pressure calculated in Step S51 and the target water balance calculated in Step S24 of the target water balance calculating process (Step S562).

Subsequently, the anode gas circulation flow rate control unit 250 calculates the target anode gas circulation flow rate on the basis of various pieces of read data (Step S563). Further, the anode gas circulation flow rate control unit 250 obtains the current anode gas circulation flow rate estimated by the operating state detecting unit 220 on the basis of the rotation speed of the anode circulation pump 36, the anode gas pressure detected by the pressure sensor 37 and the stack temperature (Step S564).

Subsequently, the anode gas circulation flow rate limiting unit 270 calculates the limit value of the change rate of the anode gas circulation flow rate on the basis of the obtained current anode gas circulation flow rate and the target anode gas circulation flow rate (Step S565). It should be noted that the method for calculating the limit value of the change rate is not described in detail here since having been described in detail above.

Then, the anode gas circulation flow rate control unit 250 ends this target anode gas circulation flow rate calculating process (wet) and returns to the main flow of the wet operation control quantity calculating process.

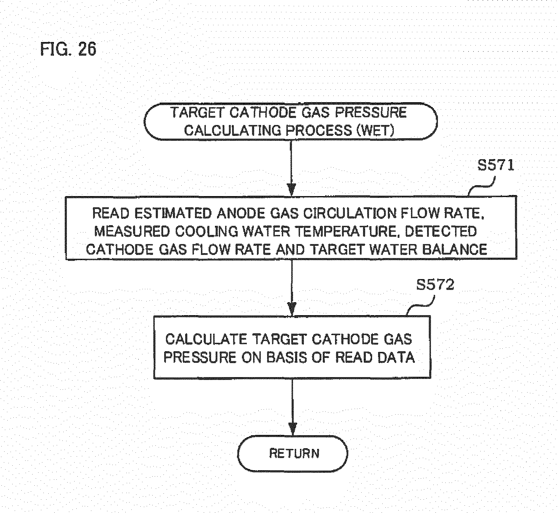

FIG. 26 is a flow chart showing an example of the target cathode gas pressure calculating process (wet), which is a subroutine corresponding to Step S57 of the wet operation control quantity calculating process. The control quantity compensating unit 260 performs this target cathode gas pressure calculating process (wet) after the end of the target cathode gas flow rate calculating process (wet), the target cooling water temperature calculating process (wet) and the target anode gas circulation flow rate calculating process (wet).

The control quantity compensating unit 260 first reads the anode gas circulation flow rate estimated in Step S564, the cooling water temperature obtained in Step S561, the cathode gas flow rate obtained in Step S551 and the target water balance calculated in Step S24 of the target water balance calculating process (Step S571).

Subsequently, the control quantity compensating unit 260 calculates the target cathode gas pressure on the basis of various pieces of read data (Step S572). Then, the control quantity compensating unit 260 ends this target cathode gas pressure calculating process (wet) and returns to the main flow of the wet operation control quantity calculating process.

When each target value in the wet operation is calculated in the above way, the controller 200 returns to the main flow of the control quantity compensating process, performs each actuator control process for controlling the drive of each actuator (Step S6) and ends this control quantity compensating process.

As described above, the fuel cell system 100 of the present embodiment is the fuel cell system 100 for generating power by supplying the anode gas and the cathode gas to the fuel cells 10 (fuel cell stack 1) and includes the anode gas circulation passage 35 for supplying the anode off-gas discharged from the fuel cells 10 and the anode gas to be supplied to the fuel cells 10 to the fuel cells 10 while mixing the anode off-gas and the anode gas, the wet/dry state detecting unit 210 for detecting the wet/dry state of the electrolyte membranes 111 of the fuel cells 10 and the wet/dry state control unit 230 for controlling the wet/dry state of the electrolyte membranes 111 by manipulating a plurality of physical quantities (cathode gas flow rate, cathode gas pressure and cooling water temperature in the present embodiment) including the anode gas circulation flow rate. The control device (controller 200) of the fuel cell system 100 of the present embodiment includes the anode gas circulation flow rate control unit 250 for controlling the anode gas circulation flow rate of the anode gas circulation passage 35 on the basis of the wet/dry state of the electrolyte membranes 111 detected by the wet/dry state detecting unit 210 and the priority setting unit 240 for setting the priority levels of the normal manipulation for the plurality of physical quantities to be manipulated by the wet/dry state control unit 230. Here, the anode gas circulation flow rate control unit 250 includes the anode gas circulation flow rate limiting unit 270 for limiting the change rate per unit time of the anode gas circulation flow rate during the transient operation of changing the wet/dry state of the electrolyte membranes 111 and the control quantity compensating unit 260 for compensating for the control quantity of the wet/dry state insufficient due to the limitation of the anode gas circulation flow rate by the manipulation of the physical quantity having a lower priority of the normal manipulation than the anode gas circulation flow rate set by the priority setting unit 240 if the change rate of the anode gas circulation flow rate is limited by the anode gas circulation flow rate limiting unit 270.

Since the control device (controller 200) of the fuel cell system 100 of the present embodiment is configured as just described, it can be effectively suppressed that the intended control (e.g. dry operation or wet operation) transiently becomes an opposite control by limiting the change rate in the control of the anode gas circulation flow rate. In the case of limiting the change rate of the anode gas circulation flow rate, the insufficient control quantity of the physical quantity having a lower priority than the anode gas circulation flow rate can be compensated for. Thus, according to the control device of the fuel cell system 100 of the present embodiment, such an influence that the control transiently provides an opposite effect at the start can be reduced while the steady priority levels are maintained.

In the control device (controller 200) of the fuel cell system 100 of the present embodiment, if an operation of wetting the fuel cells 10 is started with the pressure of the cathode gas (cathode gas pressure) to be supplied to the fuel cell stack 1 included as a manipulation object having a lower priority of the normal manipulation than the anode gas circulation flow rate in an operation of wetting the electrolyte membranes 111 of the fuel cells 10, the anode gas circulation flow rate limiting unit 270 limits the change rate per unit time of the anode gas circulation flow rate and the control quantity compensating unit 260 (target cathode gas pressure calculating unit 261) compensates for the control quantity of the wet/dry state insufficient due to the limitation of the anode gas circulation flow rate by an manipulation of increasing the pressure of the cathode gas to be supplied. In the case of controlling the anode gas circulation flow rate in the wet operation, the electrolyte membranes 111 possibly transiently become dry if the command value of the anode gas circulation flow rate is suddenly changed in a step-like manner. Thus, in the present embodiment, the change rate of the anode gas circulation flow rate is limited and the insufficient control quantity is compensated for by the control of the cathode gas pressure. In this way, such an influence that the control transiently provides an opposite effect at the start can be reduced while the steady priority levels of the anode gas circulation flow rate and the cathode gas pressure are maintained.

In the control device (controller 200) of the fuel cell system 100 of the present embodiment, if an operation of drying the electrolyte membranes 111 of the fuel cells 10 is started with the temperature of the cooling water (cooling water temperature) for cooling the fuel cell stack 1 and the flow rate of the cathode gas (cathode gas flow rate) to be supplied to the fuel cell stack 1 included as manipulation objects having a lower priority of the normal manipulation than the anode gas circulation flow rate in the operation of drying the electrolyte membranes 111 of the fuel cells 10, the anode gas circulation flow rate limiting unit 270 limits the change rate per unit time of the anode gas circulation flow rate and the control quantity compensating unit 260 (target cooling water temperature calculating unit 262 or target cathode gas flow rate calculating unit 263) compensates for the control quantity of the wet/dry state insufficient due to the limitation of the change rate of the anode gas circulation flow rate by at least one of an manipulation of increasing the temperature of the cooling water and an operating of increasing the cathode gas flow rate. In the case of controlling the anode gas circulation flow rate in the dry operation, the electrolyte membranes 111 possibly transiently become wet if the command value of the anode gas circulation flow rate is suddenly changed in a step-like manner. Thus, in the present embodiment, the change rate of the anode gas circulation flow rate is limited and the insufficient control quantity is compensated for by the control of the cooling water temperature or the control of the cathode gas flow rate. In this way, such an influence that the control transiently provides an opposite effect at the start can be reduced while the steady priority levels of the anode gas circulation flow rate, the cooling water temperature and the cathode gas flow rate are maintained.

In the control device (controller 200) of the fuel cell system 100 of the present embodiment, the anode gas circulation flow rate control unit 250 further includes the cooling water temperature limiting unit 280 for limiting the change rate per unit time of the temperature of the cooling water (cooling water temperature) during the transient operation of changing the wet/dry state of the electrolyte membranes 11, and the control quantity compensating unit 260 also compensates for the control quantity of the wet/dry state insufficient due to the limitation of the cooling water temperature by an manipulation of increasing the cathode gas flow rate. In the present embodiment, in the dry operation, the change rate of the anode gas circulation flow rate is limited, the change rate of the cooling water temperature is also limited and the insufficient control quantity is compensated for by the flow rate of the cathode gas. In this way, an operation in an opposite direction due to a relationship of the cooling water temperature and the anode gas circulation flow rate can be also simultaneously reduced while a transient operation in the opposite direction caused by the manipulation of the anode gas circulation flow rate is reduced.

In the control device (controller 200) of the fuel cell system 100 of the present embodiment, the anode gas circulation flow rate limiting unit 270 is configured to remove the limitation of the change rate of the anode gas circulation flow rate if there is a concern for hydrogen deficiency during the transient operation of changing the wet/dry state of the electrolyte membranes 111 or if the anode gas should be quickly supplied to the fuel cell stack 1 to prevent the degradation of the cathode catalyst layers caused by hydrogen front at the start of the fuel cell system 100. As just described, if it is necessary to quickly supply the anode gas to the fuel cells 10, more anode gas can be supplied to the fuel cells 10 by removing the limitation of the change rate of the anode gas circulation flow rate of the present embodiment. In this way, water clogging near the exits of the anode gas flow passages 121 of the fuel cells 10 of the fuel cell stack 1, catalyst degradation at the start and the like can be effectively prevented.

In the control device (controller 200) of the fuel cell system 100 of the present embodiment, the wet/dry state detected by the wet/dry state detecting unit 210 may be the water balance calculated as a balance between the amount of water (moisture) flowing into the fuel cell stack 1 and water generated in the fuel cell stack 1 and the amount of water discharged from the fuel cells. By using the water balance in this way, compensation for the insufficient control quantity can be realized among different physical units (dimensions) such as the pressure, the flow rate and the temperature.

In the control device (controller 200) of the fuel cell system 100 of the present embodiment, the anode gas circulation flow rate control unit 250 is configured to include the anode circulation pump 36. By using the anode circulation pump 36, the flow rate can be seamlessly controlled even as compared to multi-stage switching of an ejector. In this way, the change rate of the anode gas circulation flow rate limiting unit 270 can also be easily limited.

In the control device (controller 200) of the fuel cell system 100 of the present embodiment, the plurality of physical quantities include four physical quantities composed of the anode gas circulation flow rate, the pressure of the cathode gas to be supplied to the fuel cell stack 1, the flow rate of the cathode gas to be supplied to the fuel cell stack 1 and the temperature of the cooling water for cooling the fuel cell stack 1. By successively controlling the four physical quantities in this way, the wet/dry state of the electrolyte membranes 111 of the fuel cells 10 can be efficiently controlled while the rebound and overshooting of the control are suppressed. On the other hand, in the case of using the stack output current as one of the plurality of physical quantities, the output of the fuel cell stack 1 itself varies. Thus, the rebound and overshooting of the control occur. Therefore, in the present embodiment, the above four physical quantities are set as control targets.

In the control device (controller 200) of the fuel cell system 100 of the present embodiment, the priority setting unit 240 sets steady priority levels in a decreasing order for the manipulation of decreasing the cathode gas pressure, the manipulation of decreasing the anode gas circulation flow rate, the manipulation of increasing the cooling water temperature and the manipulation of increasing the cathode gas flow rate in the operation of drying the electrolyte membranes 111 of the fuel cells 10. Further, the priority setting unit 240 sets steady priority levels in a decreasing order for the manipulation of decreasing the cathode gas flow rate, the manipulation of decreasing the cooling water temperature, the manipulation of increasing the anode gas circulation flow rate and the manipulation of increasing the cathode gas pressure in the operation of wetting the electrolyte membranes 111 of the fuel cells 10. Priorities are given to the plurality of physical quantities serving as the control targets in this way to consider the power consumption of each auxiliary machine and prevent interference with the controls of the other physical quantities in the case of simultaneously operating these. In this way, wasteful power consumption can be suppressed while unnecessary operations are eliminated.

It should be noted that, in the dry operation, the cathode gas pressure having a higher priority is decreased earlier than the anode gas circulation flow rate is decreased. This is because the physical quantity that decreases the power consumption is manipulated earlier in consideration of the power consumption. For example, in the case of supplying the cathode gas by the compressor 22, the higher the cathode gas pressure, the larger the power consumption of the compressor 22. Further, since the power consumption of the compressor 22 is larger than that of the anode circulation pump 36, the manipulation of the cathode gas pressure is prioritized.

Further, the anode gas circulation flow rate does not have a lowest priority in the wet operation because the control quantity cannot be compensated for. Furthermore, in the wet operation, the cathode gas flow rate is decreased earlier than the cooling water temperature is decreased. This is because not only the power consumption, but also control responsiveness is considered. This is to prevent the degradation of controllability since the manipulation responsiveness of the cooling water temperature is poorer than the other physical quantities.

The control method for the fuel cell system 100 in the present embodiment is a control method for the fuel cell system 100 configured to generate power by supplying the anode gas and the cathode gas to the fuel cell stack 1 and including the anode gas circulation passage 35 for supplying the anode off-gas discharged from the fuel cell stack 1 and the anode gas to be supplied to the fuel cell stack 1 to the fuel cell stack while mixing the anode-off gas and the anode gas and includes detecting the wet/dry state of the electrolyte membranes 111 of the fuel cells 10, controlling the anode gas circulation flow rate of the anode gas circulation passage 35 on the basis of the detected wet/dry state of the electrolyte membranes 111, controlling the wet/dry state of the electrolyte membranes 111 by manipulating the plurality of physical quantities (controlling the corresponding actuators) including the anode gas circulation flow rate and having the priority of the normal manipulation set for each physical quantity, limiting the change rate per unit time of the anode gas circulation flow rate during the transient operation of changing the wet/dry state of the electrolyte membranes 111, and compensating for the control quantity of the wet/dry state insufficient due to the limitation of the anode gas circulation flow rate by the manipulation of the physical quantity having a lower priority of the normal manipulation than the anode gas circulation flow rate if the change rate of the anode gas circulation flow rate is limited. By controlling the fuel cell system 100 in this way, effects similar to those described above can be obtained.

Although the embodiment of the present invention has been described above, the above embodiment is merely an illustration of one application example of the present invention and not intended to limit the technical scope of the present invention to the specific configuration of the above embodiment.

In the above embodiment, the cathode gas pressure, the cooling water temperature and the cathode gas flow rate are listed as the physical quantities to be controlled by the dry operation and the wet operation besides the anode gas circulation flow rate. However, the present invention is not limited to these physical quantities and, for example, one of these may not be included in the physical quantities serving as the control targets. In this case, the change rate of the anode gas circulation flow rate needs to be limited, wherefore at least one physical quantity having a lower priority than the anode gas circulation flow rate is necessary. Thus, the physical quantity removable from both the dry operation and the wet operation is only the cathode gas flow rate.

Further, although the four physical quantities including the anode gas circulation flow rate, the cathode gas pressure, the cooling water temperature and the cathode gas flow rate are listed as the physical quantities serving as the control targets in the above embodiment, the present invention is not limited to these four. For example, circulating storage water may be included as a control target in addition to the four physical quantities.

## Claims

1. A control device (200) for fuel cell system (100) for generating power according to a request of a load by supplying anode gas and cathode gas to a fuel cell (1), the fuel cell system (100) being an anode gas circulation-type fuel cell system (100) provided with:

    an anode gas circulation passage (35) for supplying anode off-gas discharged from the fuel cell (1) and the anode gas, which is to be supplied to the fuel cell (1), to the fuel cell (1) by mixing the anode off-gas and the anode gas;
    a wet/dry state detecting unit (230) configured to detect a wet/dry state of an electrolyte membrane (111) of the fuel cell (1); and
    a wet/dry state control unit configured to control the wet/dry state of the electrolyte membrane (111) by manipulating a plurality of physical quantities including a circulation flow rate of the anode gas flowing in the anode gas circulation passage (35);
    the control device (200), comprising:

        an anode gas circulation flow rate control unit (250) configured to control the anode gas circulation flow rate on the basis of the wet/dry state of the electrolyte membrane (111) detected by the wet/dry state detecting unit (230); and
a priority setting unit (240) configured to set priority levels of a normal manipulation to the plurality of physical quantities to be manipulated by the wet/dry state control unit; wherein,
the anode gas circulation flow rate control unit (250) includes:

an anode gas circulation flow rate limiting unit (270) configured to limit a change rate per unit time of the anode gas circulation flow rate during a transient operation for changing the wet/dry state of the electrolyte membrane (111); and
a control quantity compensating unit (260) configured to, if the change rate of the anode gas circulation flow rate is limited by the anode gas circulation flow rate limiting unit (270), compensate an insufficiency in a control quantity of the wet/dry state due to the limitation of the anode gas circulation flow rate, the compensation being carried out by manipulating a physical quantity with a lower priority level of the normal manipulation than a priority level of the normal manipulation of the anode gas circulation flow rate set by the priority setting unit (240).

2. The control device (200) for fuel cell system (100) according to claim 1, wherein:

a pressure of the cathode gas to be supplied to the fuel cell (1) is included as a manipulation object having the lower priority level of the normal manipulation in an operation of wetting the electrolyte membrane (111) of the fuel cell (1); and
when the operation of wetting the electrolyte membrane (111) is started,

the anode gas circulation flow rate limiting unit (270) limits the change rate per unit time of the anode gas circulation flow rate and
the control quantity compensating unit (260) compensates the insufficiency in the control quantity of the wet/dry state due to the limitation of the anode gas circulation flow rate, the compensation being carried out by an manipulation of increasing the pressure of the cathode gas to be supplied.

3. The control device (200) for fuel cell system (100) according to claim 1 or 2, wherein:

a temperature of cooling water for cooling the fuel cell (1) and a flow rate of the cathode gas to be supplied to the fuel cell (1) are included as manipulation objects having the lower priority level of the normal manipulation in an operation of drying the electrolyte membrane (111) of the fuel cell (1); and
when the operation of drying the electrolyte membrane (111) is started,

the anode gas circulation flow rate limiting unit (270) limits the change rate per unit time of the anode gas circulation flow rate and
the control quantity compensating unit (260) compensates the insufficiency in the control quantity of the wet/dry state due to the limitation of the anode gas circulation flow rate, the compensation being carried out by at least one of manipulations of increasing the temperature of the cooling water and the pressure of the cathode gas.

4. The control device (200) for fuel cell system (100) according to claim 3, further comprising:

a cooling water temperature limiting unit (280) configured to limit a change rate per unit time of the temperature of the cooling water during the transient operation of changing the wet/dry state of the electrolyte membrane (111); wherein the control quantity compensating unit (260) compensates an insufficiency in the control quantity of the wet/dry state due to the limitation of the temperature, the compensation also being carried out by the manipulation of increasing the pressure of the cathode gas.

5. The control device (200) for fuel cell system (100) according to any one of claims 1 to 4, wherein:
the anode gas circulation flow rate limiting unit (270) cancels the limitation of the change rate of the anode gas circulation flow rate if there is a concern for hydrogen deficiency during the transient operation of changing the wet/dry state of the electrolyte membrane (111) or if the anode gas is supposed to be quickly supplied to the fuel cell (1) at the start of the fuel cell system (100).

6. The control device (200) for fuel cell system (100) according to any one of claims 1 to 5, wherein:
the wet/dry state detected by the wet/dry state detecting unit (230) is determined by a water balance calculated as a balance between an amount of water flowing into or generated in the fuel cell (1) and an amount of water discharged from the fuel cell (1).

7. The control device (200) for fuel cell system (100) according to any one of claims 1 to 6, wherein:
the anode gas circulation flow rate control unit (250) includes an anode circulation pump.

8. The control device (200) for fuel cell system (100) according to any one of claims 1 to 7, wherein:
the plurality of physical quantities include a pressure of the cathode gas to be supplied to the fuel cell (1), a flow rate of the cathode gas to be supplied to the fuel cell (1) and a temperature of cooling water for cooling the fuel cell (1) in addition to the anode gas circulation flow rate.

9. The control device (200) for fuel cell system (100) according to claim 8, wherein:

the priority setting unit (240) sets the priority levels in a decreasing order for a manipulation of decreasing the cathode gas pressure, a manipulation of decreasing the anode gas circulation flow rate, a manipulation of increasing the cooling water temperature and a manipulation of increasing the cathode gas flow rate in an operation of drying the electrolyte membrane (111) of the fuel cell (1); and
the priority setting unit (240) sets the priority levels in a decreasing order for a manipulation of decreasing the cathode gas flow rate, a manipulation of decreasing the cooling water temperature, a manipulation of increasing the anode gas circulation flow rate and a manipulation of increasing the cathode gas pressure in an operation of wetting the electrolyte membrane (111) of the fuel cell (1).

10. A control method for fuel cell system (100) configured to generate power by supplying anode gas and cathode gas to a fuel cell (1), being provided with an anode gas circulation passage (35) for supplying anode off-gas discharged from the fuel cell (1) and the anode gas, which is to be supplied to the fuel cell (1), to the fuel cell (1) by mixing the anode off-gas and the anode gas, comprising:

detecting a wet/dry state of an electrolyte membrane (111) of the fuel cell (1);
controlling an anode gas circulation flow rate of the anode gas circulation passage (35) on the basis of the detected wet/dry state of the electrolyte membrane (111); and
controlling the wet/dry state of the electrolyte membrane (111) by manipulating a plurality of physical quantities including the anode gas circulation flow rate, each of priority levels of a normal manipulation being set to the plurality of physical quantities; wherein,
controlling of the wet/dry state of the electrolyte membrane (111) includes:

limiting a change rate per unit time of the anode gas circulation flow rate during a transient operation of changing the wet/dry state of the electrolyte membrane (111); and
compensating an insufficiency in a control quantity of the wet/dry state insufficient due to the limitation of the anode gas circulation flow rate by manipulating the physical quantity having a lower priority of the normal manipulation than that of the anode gas circulation flow rate if the change rate of the anode gas circulation flow rate is limited.

**Patentansprüche**

1. Eine Steuervorrichtung (200) für Brennstoffzellensystem (100) zum Erzeugen von Energie gemäß einer Anforderung eines Verbrauchers durch Bereitstellen von Anodengas und Kathodengas an eine Brennstoffzelle (1), wobei das Brennstoffzellensystem (100) ein Anodengas-Zirkulationstyp-Brennstoffzellensystem (100) ist, das versehen ist mit:

einem Anodengaszirkulationsdurchlass (35) zum Bereitstellen von Anodenabgas, das von der Brennstoffzelle (1) abgesondert wird, und dem Anodengas, das der Brennstoffzelle (1) bereitgestellt werden soll, an die Brennstoffzelle (1) durch Vermischen des Anodenabgases und des Anodengases;
eine Feucht/Trocken-Zustandsermittlungseinheit (230), die ausgestaltet ist, einen Feucht/Trocken-Zustand einer elektrolytischen Membran (111) der Brennstoffzelle (1) zu ermitteln; und
eine Feucht/Trocken-Zustandssteuereinheit, die ausgestaltet ist, den Feucht/Trocken-Zustand der elektrolytischen Membran (111) durch Beeinflussen einer Vielzahl von physikalischen Größen, einschließlich einer Zirkulationsströmungsrate des Anodengases, das in den Anodengaszirkulationsdurchlass (35) strömt, zu steuern; wobei die Steuervorrichtung (200) aufweist:

eine Anodengaszirkulationsströmungsratensteuereinheit (250), die ausgestaltet ist, die Anodengaszirkulationsströmungsrate auf der Grundlage des Feucht/Trocken-Zustands der elektrolytischen Membran (111), der von der Feucht/Trocken-Zustandsermittlungseinheit (230) ermittelt wird, zu steuern; und

eine Prioritätsfestlegungseinheit (240), die ausgestaltet ist, Prioritätsniveaus einer normalen Beeinflussung an die Vielzahl von physikalischen Größen, die von der Feucht/Trocken-Zustandssteuereinheit zu beeinflussen sind, festzulegen; wobei die Anodengaszirkulationsströmungsratensteuereinheit (250) beinhaltet:

eine Anodengaszirkulationsströmungsratenbegrenzungseinheit (270), die ausgestaltet ist, eine Änderungsrate pro Einheitszeit der Anodengaszirkulationsströmungsrate während eines Übergangsbetriebs zum Ändern des Feucht/Trocken-Zustands der elektrolytischen Membran (111) zu begrenzen; und

eine Steuergrößenkompensationseinheit (260), die ausgestaltet ist, wenn die Änderungsrate der Anodengaszirkulationsströmungsrate von der Anodengaszirkulationsströmungsratenbegrenzungseinheit (270) begrenzt wird, einen Mangel in einer Steuergröße des Feucht/Trocken-Zustands aufgrund der Begrenzung der Anodengaszirkulationsströmungsrate zu kompensieren, wobei die Kompensation durch Beeinflussen einer physikalischen Größe mit einem niedrigeren Prioritätsniveau der normalen Beeinflussung als ein Prioritätsniveau der normalen Beeinflussung der Anodengaszirkulationsströmungsrate, das von der Prioritätsfestlegungseinheit (240) festgelegt wird, ausgeführt wird.

2. Die Steuervorrichtung (200) für Brennstoffzellensystem (100) gemäß Anspruch 1, wobei:

ein Druck des Kathodengases, das der Brennstoffzelle (1) bereitgestellt werden soll, als ein Beeinflussungsobjekt beinhaltet ist, das das niedrigere Prioritätsniveau der normalen Beeinflussung in einem Betrieb des Befeuchtens der elektrolytischen Membran (111) der Brennstoffzelle (1) aufweist; und

wenn der Betrieb des Befeuchtens der elektrolytischen Membran (111) gestartet wird, die Anodengaszirkulationsströmungsratenbegrenzungseinheit (270) die Änderungsrate pro Einheitszeit der Anodengaszirkulationsströmungsrate begrenzt und

die Steuergrößenkompensationseinheit (260) den Mangel in der Steuergröße des Feucht/Trocken-Zustands aufgrund der Begrenzung der Anodengaszirkulationsströmungsrate kompensiert, wobei die Kompensation durch eine Beeinflussung des Erhöhens des Drucks des bereitzustellenden Kathodengases ausgeführt wird.

3. Die Steuervorrichtung (200) für Brennstoffzellensystem (100) gemäß Anspruch 1 oder 2, wobei:

eine Temperatur von Kühlwasser zum Kühlen der Brennstoffzelle (1) und eine Strömungsrate des Kathodengases, das der Brennstoffzelle (1) bereitgestellt werden soll, als Beeinflussungsobjekte beinhaltet sind, die das niedrigere Prioritätsniveau der normalen Beeinflussung in einem Betrieb des Trocknens der elektrolytischen Membran (111) der Brennstoffzelle (1) aufweisen; und

wenn der Betrieb des Trocknens der elektrolytischen Membran (111) gestartet wird, die Anodengaszirkulationsströmungsratenbegrenzungseinheit (270) die Änderungsrate pro Einheitszeit der Anodengaszirkulationsströmungsrate begrenzt und

die Steuergrößenkompensationseinheit (260) den Mangel in der Steuergröße des Feucht/Trocken-Zustands aufgrund der Begrenzung der Anodengaszirkulationsströmungsrate kompensiert, wobei die Kompensation durch zumindest eine von Beeinflussungen des Erhöhens der Temperatur des Kühlwassers und des Drucks des Kathodengases ausgeführt wird.

4. Die Steuervorrichtung (200) für Brennstoffzellensystem (100) gemäß Anspruch 3, weiterhin aufweisend:

eine Kühlwassertemperaturbegrenzungseinheit (280), die ausgestaltet ist, eine Änderungsrate pro Einheitszeit der Temperatur des Kühlwassers während des Übergangsbetriebs des Änderns des Feucht/Trocken-Zustands der elektrolytischen Membran (111) zu begrenzen;

wobei die Steuergrößenkompensationseinheit (260) einen Mangel in der Steuergröße des Feucht/Trocken-Zustands aufgrund der Begrenzung der Temperatur kompensiert, wobei die Kompensation auch durch die Beeinflussungen des Erhöhens des Drucks des Kathodengases ausgeführt wird.

5. Die Steuervorrichtung (200) für Brennstoffzellensystem (100) gemäß irgendeinem der Ansprüche 1 bis 4, wobei: die Anodengaszirkulationsströmungsratenbegrenzungseinheit (270) die Begrenzung der Änderungsrate der Anodengaszirkulationsströmungsrate unterbindet, wenn es eine Sorge um Wasserstoffdefizit während der Übergangsoperation des Änderns des Feucht/Trocken-Zustands der elektrolytischen Membran (111) gibt oder wenn das Anodengas der Brennstoffzelle (1) beim Start des Brennstoffzellensystems (100) schnell bereitgestellt werden soll.

6. Die Steuervorrichtung (200) für Brennstoffzellensystem (100) gemäß irgendeinem der Ansprüche 1 bis 5, wobei: der Feucht/Trocken-Zustand, der von der Feucht/Trocken-Zustandsermittlungseinheit (230) ermittelt wird, anhand eines Wassergleichgewichts bestimmt wird, das als ein Gleichgewicht zwischen einer Menge von Wasser, das in die Brennstoffzelle (1) strömt oder in der Brennstoffzelle (1) erzeugt wird, und einer Menge von Wasser, das von der Brennstoffzelle (1) abgesondert wird, berechnet wird.

7. Die Steuervorrichtung (200) für Brennstoffzellensystem (100) gemäß irgendeinem der Ansprüche 1 bis 6, wobei: die Anodengaszirkulationsströmungsratensteuereinheit (250) eine Anodenzirkulationspumpe beinhaltet.

8. Die Steuervorrichtung (200) für Brennstoffzellensystem (100) gemäß irgendeinem der Ansprüche 1 bis 7, wobei: die Vielzahl von physikalischen Größen einen Druck des Kathodengases, das der Brennstoffzelle (1) bereitgestellt werden soll, eine Strömungsrate des Kathodengases, das der Brennstoffzelle (1) bereitgestellt werden soll, und eine Temperatur des Kühlwassers zum Kühlen der Brennstoffzelle (1) zusätzlich zur Anodengaszirkulationsströmungsrate beinhalten.

9. Die Steuervorrichtung (200) für Brennstoffzellensystem (100) gemäß Anspruch 8, wobei:

die Prioritätsfestlegungseinheit (240) die Prioritätsniveaus in einer abnehmenden Reihenfolge für eine Beeinflussung des Verringerns des Kathodengasdrucks, eine Beeinflussung des Verringerns der Anodengaszirkulationsströmungsrate, eine Beeinflussung des Erhöhens der Kühlwassertemperatur und eine Beeinflussung des Erhöhens der Kathodengasströmungsrate in einem Betrieb des Trocknens der elektrolytischen Membran (111) der Brennstoffzelle (1) festlegt; und die Prioritätsfestlegungseinheit (240) die Prioritätsniveaus in einer abnehmenden Reihenfolge für eine Beeinflussung des Verringerns der Kathodengasströmungsrate, eine Beeinflussung des Verringerns der Kühlwassertemperatur, eine Beeinflussung des Erhöhens der Anodengaszirkulationsströmungsrate und eine Beeinflussung des Erhöhens des Kathodengasdrucks in einem Betrieb des Befeuchtens der elektrolytischen Membran (111) der Brennstoffzelle (1) festlegt.

10. Ein Steuerverfahren für Brennstoffzellensystem (100), das ausgestaltet ist, Energie durch Bereitstellen von Anodengas und Kathodengas an eine Brennstoffzelle (1) zu erzeugen, das mit einem Anodengaszirkulationsdurchlass (35) zum Bereitstellen von Anodenabgas, das von der Brennstoffzelle (1) abgesondert wird, und dem Anodengas, das der Brennstoffzelle (1) bereitgestellt werden soll, an die Brennstoffzelle (1) durch Vermischen des Anodenabgases und des Anodengases versehen ist, aufweisend:

Ermitteln eines Feucht/Trocken-Zustands einer elektrolytischen Membran (111) der Brennstoffzelle (1); Steuern einer Anodengaszirkulationsströmungsrate des Anodengaszirkulationsdurchlasses (35) auf der Grundlage des ermittelten Feucht/Trocken-Zustands der elektrolytischen Membran (111); und Steuern des Feucht/Trocken-Zustand der elektrolytischen Membran (111) durch Beeinflussen einer Vielzahl von physikalischen Größen, einschließlich der Anodengaszirkulationsströmungsrate, wobei jedes von Prioritätsniveaus einer normalen Beeinflussung an die Vielzahl von physikalischen Größen festgelegt wird; wobei das Steuern des Feucht/Trocken-Zustands der elektrolytischen Membran (111) beinhaltet: Begrenzen einer Änderungsrate pro Einheitszeit der Anodengaszirkulationsströmungsrate während eines Übergangsbestriebs des Änderns des Feucht/Trocken-Zustands der elektrolytischen Membran (111); und Kompensieren eines Mangels in einer Steuergröße des Feucht/Trocken-Zustands, der unzureichend ist aufgrund der Begrenzung der Anodengaszirkulationsströmungsrate, durch Beeinflussen der physikalischen Größe, die eine niedrigere Priorität der normalen Beeinflussung aufweist als die der Anodengaszirkulationsströmungsrate, wenn die Änderungsrate der Anodengaszirkulationsströmungsrate begrenzt wird.

Revendications

1. Dispositif de contrôle (200) pour système de pile à combustible (100) destiné à générer de l'électricité en fonction de la demande d'une charge en fournissant du gaz d'anode et du gaz de cathode à une pile à combustible (1), le système de pile à combustible (100) étant un système de pile à combustible du type à circulation de gaz d'anode (100), pourvu :

d'un passage de circulation de gaz d'anode (35) pour alimenter un effluent gazeux d'anode déchargé par la pile à combustible (1) et le gaz d'anode, qui doit être alimenté à la pile à combustible (1), à la pile à combustible (1), en mélangeant l'effluent gazeux d'anode et le gaz d'anode ;

d'une unité de détection d'état humide/sec (230) configurée pour détecter l'état humide/sec d'une membrane électrolytique (111) de la pile à combustible (1) ; et

d'une unité de contrôle d'état humide/sec configurée pour contrôler l'état humide/sec de la membrane électrolytique (111) en manipulant une pluralité de quantités physiques incluant un débit de circulation du gaz d'anode qui s'écoule dans le passage de circulation de gaz d'anode (35) ;

le dispositif de contrôle (200) comprenant :

une unité de contrôle de débit de circulation de gaz d'anode (250) configurée pour contrôler le débit de circulation de gaz d'anode sur base de l'état humide/sec de la membrane électrolytique (111) détecté par l'unité de détection d'état humide/sec (230) ; et

une unité d'établissement de priorité (240) configurée pour établir les niveaux de priorité d'une manipulation normale à la pluralité de quantités physiques à manipuler par l'unité de contrôle d'état humide/sec ;

dans lequel l'unité de contrôle de débit de circulation de gaz d'anode (250) comprend :

une unité de limitation du débit de circulation de gaz d'anode (270) configurée pour limiter le taux de variation par unité de temps du débit de circulation de gaz d'anode durant l'opération transitoire de changement de l'état humide/sec de la membrane électrolytique (111) ; et

une unité de compensation de quantité de contrôle (260) configurée, si le taux de variation du débit de circulation de gaz d'anode est limité par l'unité de limitation du débit de circulation du gaz d'anode (270), pour compenser une insuffisance de quantité de contrôle de l'état humide/sec due à la limitation du débit de circulation de gaz d'anode, la compensation étant mise en oeuvre par manipulation d'une quantité physique avec un niveau de priorité inférieur de la manipulation normale qu'un niveau de priorité de la manipulation normale du débit de circulation de gaz d'anode établi par l'unité d'établissement de priorité (240).

2.  Dispositif de contrôle (200) pour système de pile à combustible (100) selon la revendication 1, dans lequel :

la pression du gaz de cathode à alimenter à la pile à combustible (1) est incluse comme objet de manipulation ayant le niveau de priorité inférieur de la manipulation normale dans une opération de mouillage de la membrane électrolytique (111) de la pile à combustible (1) ; et

quand l'opération de mouillage de la membrane électrolytique (111) est démarrée,

l'unité de limitation du débit de circulation de gaz d'anode (270) limite le taux de variation par unité de temps du débit de circulation de gaz d'anode et

l'unité de compensation de quantité de contrôle (260) compense l'insuffisance de la quantité de contrôle de l'état humide/sec due à la limitation du débit de circulation de gaz d'anode, la compensation étant mise en oeuvre par une manipulation d'augmentation de la pression du gaz de cathode à alimenter.

3.  Dispositif de contrôle (200) pour système de pile à combustible (100) selon la revendication 1 ou 2, dans lequel :

la température de l'eau de refroidissement pour refroidir la pile à combustible (1) et le débit du gaz de cathode à alimenter à la pile à combustible (1) sont inclus comme objets de manipulation ayant le niveau de priorité inférieur de la manipulation normale dans une opération de séchage de la membrane électrolytique (111) de la pile à combustible (1) ; et

quand l'opération de séchage de la membrane électrolytique (111) est démarrée,

l'unité de limitation du débit de circulation de gaz d'anode (270) limite le taux de variation par unité de temps du débit de circulation de gaz d'anode, et

l'unité de compensation de quantité de contrôle (260) compense l'insuffisance de la quantité de contrôle de l'état humide/sec due à la limitation du débit de circulation de gaz d'anode, la compensation étant mise en oeuvre par au moins l'une des manipulations d'augmentation de la température de l'eau de refroidissement et de la pression du gaz de cathode.

4.  Dispositif de contrôle (200) pour système de pile à combustible (100) selon la revendication 3, comprenant en outre :

une unité de limitation de la température d'eau de refroidissement (280) configurée pour limiter le taux de variation par unité de temps de la température de l'eau de refroidissement durant l'opération transitoire de changement de l'état humide/sec de la membrane électrolytique (111) ;
dans lequel l'unité de compensation de quantité de contrôle (260) compense l'insuffisance de la quantité de contrôle de l'état humide/sec due à la limitation de la température, la compensation étant également mise en oeuvre par la manipulation d'augmentation de la pression du gaz de cathode.

5. Dispositif de contrôle (200) pour système de pile à combustible (100) selon l'une quelconque des revendications 1 à 4, dans lequel :
l'unité de limitation du débit de circulation de gaz d'anode (270) annule la limitation du taux de variation du débit de circulation de gaz d'anode s'il y a une préoccupation de déficience d'hydrogène durant l'opération transitoire de changement de l'état humide/sec de la membrane électrolytique (111) ou si le gaz d'anode est supposé être alimenté rapidement à la pile à combustible (1) au lancement du système de pile à combustible (100).

6. Dispositif de contrôle (200) pour système de pile à combustible (100) selon l'une quelconque des revendications 1 à 5, dans lequel :
l'état humide/sec détecté par l'unité de détection d'état humide/sec (230) est déterminé par un bilan hydrique calculé comme le bilan entre la quantité d'eau qui entre ou est générée dans la pile à combustible (1) et la quantité d'eau déchargée par la pile à combustible (1).

7. Dispositif de contrôle (200) pour système de pile à combustible (100) selon l'une quelconque des revendications 1 à 6, dans lequel :
l'unité de contrôle de débit de circulation de gaz d'anode (250) comprend une pompe de circulation d'anode.

8. Dispositif de contrôle (200) pour système de pile à combustible (100) selon l'une quelconque des revendications 1 à 7, dans lequel :
la pluralité de quantités physiques comprend une pression du gaz de cathode à alimenter à la pile à combustible (1), un débit du gaz de cathode à alimenter à la pile à combustible (1), et une température de l'eau de refroidissement de la pile à combustible (1), en plus du débit de circulation de gaz d'anode.

9. Dispositif de contrôle (200) pour système de pile à combustible (100) selon la revendication 8, dans lequel :

l'unité d'établissement de priorité (240) établit les niveaux de priorité en ordre décroissant pour une manipulation de réduction de la pression de gaz de cathode, une manipulation de réduction du débit de circulation de gaz d'anode, une manipulation d'augmentation de température de l'eau de refroidissement, et une manipulation d'augmentation du débit de gaz de cathode dans une opération de séchage de la membrane électrolytique (111) de la pile à combustible (1) ; et
l'unité d'établissement de priorité (240) établit les niveaux de priorité en ordre décroissant pour une manipulation de réduction du débit de gaz de cathode, une manipulation de réduction de la température d'eau de refroidissement, une manipulation d'augmentation du débit de circulation de gaz d'anode, et une manipulation d'augmentation de la pression de gaz de cathode dans une opération de mouillage de la membrane électrolytique (111) de la pile à combustible (1).

10. Procédé de contrôle pour système de pile à combustible (100) configuré pour générer de l'électricité en fournissant du gaz d'anode et du gaz de cathode à une pile à combustible (1), pourvu d'un passage de circulation de gaz d'anode (35) pour alimenter un effluent gazeux d'anode déchargé par la pile à combustible (1) et le gaz d'anode, qui doit être alimenté à la pile à combustible (1), à la pile à combustible (1) en mélangeant l'effluent gazeux d'anode et le gaz d'anode, comprenant :

la détection de l'état humide/sec d'une membrane électrolytique (111) de la pile à combustible (1) ;
le contrôle du débit de circulation de gaz d'anode du passage de circulation de gaz d'anode (35) sur base de l'état humide/sec détecté de la membrane électrolytique (111) ; et
le contrôle de l'état humide/sec de la membrane électrolytique (111) en manipulant une pluralité de quantités physiques incluant le débit de circulation de gaz d'anode, chacun des niveaux de priorité de manipulation normale étant établi à la pluralité de quantités physiques ; dans lequel
le contrôle de l'état humide/sec de la membrane électrolytique (111) inclut :

la limitation d'un taux de variation par unité de temps du débit de circulation de gaz d'anode durant une opération transitoire de changement de l'état humide/sec de la membrane électrolytique (111) ; et
la compensation d'une insuffisance de quantité de contrôle de l'état humide/sec due à la limitation du débit de circulation de gaz d'anode, en manipulant la quantité physique ayant une priorité plus faible de manipulation normale que celle du débit de circulation de gaz d'anode si le taux de variation du débit de circulation de gaz d'anode est limité.

FIG. 1

FIG. 2

FIG. 3

FIG. 4

FIG. 5

(a) CHANGE RATE LIMIT

(b) PRIMARY DELAY PROCESSING

(c) SECONDARY DELAY
PROCESSING

FIG. 6

(a)

DEAD
TIME

DEAD TIME + CHANGE RATE LIMIT

(b)

DEAD
TIME

DEAD TIME + PRIMARY DELAY PROCESSING

(c)

DEAD
TIME

DEAD TIME + SECONDARY DELAY PROCESSING

FIG. 7

FIG. 8

ANODE GAS
CIRCULATION
FLOW RATE

CATHODE
GAS PRESSURE

CATHODE GAS
FLOW RATE

WATER
BALANCE

DRY OPERATION

PRIOR ART

FIG. 9

ANODE GAS
CIRCULATION
FLOW RATE

COOLING WATER
TEMPERATURE

CATHODE GAS
FLOW RATE

WATER
BALANCE

DRY OPERATION

FIG. 10

ANODE GAS
CIRCULATION
FLOW RATE

COOLING WATER
TEMPERATURE

CATHODE
GAS FLOW
RATE

WATER
BALANCE

DRY OPERATION

FIG. 11

WET OPERATION

ANODE GAS CIRCULATION
FLOW RATE (ESTIMATED VALUE)

COOLING WATER
TEMPERATURE(MEASURED VALUE)

CATHODE GAS
FLOW RATE(MEASURED VALUE)

TARGET
CATHODE GAS
PRESSURE
CALCULATING
UNIT

261

TARGET
CATHODE GAS
PRESSURE

260

250

TARGET WATER
BALANCE

(TARGET DISCHARGED
WATER)

230

CATHODE GAS
PRESSURE (DRYEST)

COOLING WATER (MEASURED
TEMPERATURE     VALUE)

CATHODE GAS FLOW
RATE(MEASURED VALUE)

TARGET ANODE
GAS CIRCULATION
FLOW RATE
CALCULATING
UNIT

251

TARGET
ANODE GAS
CIRCULATION
FLOW RATE

270

ANODE GAS
CIRCULATION
FLOW RATE
LIMITING UNIT

CATHODE GAS
PRESSURE (DRYEST)

ANODE GAS CIRCULATION
FLOW RATE (DRYEST)

CATHODE GAS
FLOW RATE(MEASURED VALUE)

TARGET COOLING
WATER
TEMPERATURE
CALCULATING
UNIT

262

TARGET
COOLING
WATER
TEMPERATURE

CATHODE GAS
PRESSURE (DRYEST)

ANODE GAS CIRCULATION
FLOW RATE (DRYEST)

COOLING WATER
TEMPERATURE (DRYEST)

TARGET
CATHODE GAS
FLOW RATE
CALCULATING
UNIT

263

TARGET
CATHODE
GAS FLOW
RATE

EP 3 349 283 B1

FIG. 12

ANODE GAS
CIRCULATION
FLOW RATE

CATHODE
GAS PRESSURE

WATER
BALANCE

WET OPERATION

PRIOR ART

## FIG. 13

ANODE GAS
CIRCULATION
FLOW RATE

CATHODE
GAS PRESSURE

WATER
BALANCE

WET OPERATION

FIG. 14

CONTROL QUANTITY
COMPENSATING PROCESS

S1 SYSTEM OPERATING STATE
DETECTING PROCESS

S2 TARGET WATER BALANCE
CALCULATING PROCESS

S3 DRY OPERATION
NECESSARY?

No

Yes

S5 WET OPERATION CONTROL
QUANTITY CALCULATING PROCESS

S4 DRY OPERATION CONTROL
QUANTITY CALCULATING PROCESS

S6 EACH ACTUATOR CONTROL
PROCESS

END

FIG. 15

```
        ┌─────────────────────────────────────┐
        │  SYSTEM OPERATING STATE DETECTING   │
        │              PROCESS                │
        └─────────────────────────────────────┘
                         │
                         ▼                    S11
        ┌─────────────────────────────────────┐
        │     DETECT CATHODE GAS PRESSURE     │
        └─────────────────────────────────────┘
                         │
                         ▼                    S12
        ┌─────────────────────────────────────┐
        │    DETECT CATHODE GAS FLOW RATE     │
        └─────────────────────────────────────┘
                         │
                         ▼                    S13
        ┌─────────────────────────────────────┐
        │  CALCULATE TEMPERATURE OF FUEL CELL STACK │
        └─────────────────────────────────────┘
                         │
                         ▼                    S14
        ┌─────────────────────────────────────┐
        │ ESTIMATE ANODE GAS CIRCULATION FLOW RATE │
        └─────────────────────────────────────┘
                         │
                         ▼
              ┌───────────────────┐
              │      RETURN       │
              └───────────────────┘
```

FIG. 16

```
         ┌─────────────────────────────────┐
         │  TARGET WATER BALANCE CALCULATING │
         │             PROCESS               │
         └─────────────────────────────────┘
                         │
                         ▼                          S21
         ┌─────────────────────────────────┐
         │  MEASURE/CALCULATE HFR OF FUEL CELLS BY │
         │     IMPEDANCE MEASURING DEVICE    │
         └─────────────────────────────────┘
                         │
                         ▼                          S22
         ┌─────────────────────────────────┐
         │        OBTAIN MEASURED HFR        │
         └─────────────────────────────────┘
                         │
                         ▼                          S23
         ┌─────────────────────────────────┐
         │  CALCULATE TARGET HFR ON BASIS OF SYSTEM │
         │          OPERATING STATE          │
         └─────────────────────────────────┘
                         │
                         ▼                          S24
         ┌─────────────────────────────────┐
         │ CALCULATE TARGET WATER BALANCE SO THAT MEASURED │
         │       HFR REACHES TARGET HFR      │
         └─────────────────────────────────┘
                         │
                         ▼
                   ┌───────────┐
                   │  RETURN   │
                   └───────────┘
```

FIG. 17

DRY OPERATION CONTROL QUANTITY
CALCULATING PROCESS

S41

CALCULATE MAXIMUM ANODE GAS
CIRCULATION FLOW RATE

S42

CALCULATE LOWEST COOLING
WATER TEMPERATURE

S43

CALCULATE MINIMUM CATHODE GAS
FLOW RATE

S44

TARGET CATHODE GAS PRESSURE CALCULATING
PROCESS (DRY)

S45

TARGET ANODE GAS CIRCULATION FLOW RATE
CALCULATING PROCESS (DRY)

S46

TARGET COOLING WATER TEMPERATURE
CALCULATING PROCESS (DRY)

S47

TARGET CATHODE GAS FLOW RATE CALCULATING
PROCESS (DRY)

RETURN

FIG. 18

TARGET CATHODE GAS PRESSURE CALCULATING
PROCESS (DRY)

S441

READ MAXIMUM ANODE GAS CIRCULATION FLOW RATE, LOWEST
COOLING WATER TEMPERATURE, MINIMUM CATHODE GAS FLOW RATE
AND TARGET WATER BALANCE

S442

CALCULATE TARGET CATHODE GAS PRESSURE
ON BASIS OF READ DATA

RETURN

FIG. 19

```
       ╭─────────────────────────────────────────╮
       │ TARGET ANODE GAS CIRCULATION FLOW RATE  │
       │        CALCULATING PROCESS (DRY)        │
       ╰─────────────────────────────────────────╯
                          │
                          │                    S451
                          ▼
       ┌─────────────────────────────────────────┐
       │        MEASURE CATHODE GAS PRESSURE      │
       └─────────────────────────────────────────┘
                          │
                          │                    S452
                          ▼
    ┌────────────────────────────────────────────────┐
    │ READ MEASURED CATHODE GAS PRESSURE, LOWEST COOLING │
    │ WATER TEMPERATURE, MINIMUM CATHODE GAS FLOW RATE AND │
    │            TARGET WATER BALANCE                │
    └────────────────────────────────────────────────┘
                          │
                          │                    S453
                          ▼
       ┌─────────────────────────────────────────┐
       │       CALCULATE TARGET ANODE GAS        │
       │     CIRCULATION FLOW RATE ON BASIS OF   │
       │              READ DATA                  │
       └─────────────────────────────────────────┘
                          │
                          │                    S454
                          ▼
       ┌─────────────────────────────────────────┐
       │     OBTAIN ANODE GAS CIRCULATION        │
       │              FLOW RATE                  │
       └─────────────────────────────────────────┘
                          │
                          │                    S455
                          ▼
  ┌──────────────────────────────────────────────────────┐
  │ CALCULATE CHANGE RATE LIMIT VALUE OF ANODE GAS CIRCULATION FLOW │
  │ RATE ON BASIS OF OBTAINED ANODE GAS CIRCULATION FLOW RATE AND │
  │       TARGET ANODE GAS CIRCULATION FLOW RATE        │
  └──────────────────────────────────────────────────────┘
                          │
                          ▼
                  ╭───────────────╮
                  │    RETURN     │
                  ╰───────────────╯
```

FIG. 20

```
┌─────────────────────────────────┐
│  TARGET COOLING WATER TEMPERATURE │
│    CALCULATING PROCESS (DRY)      │
└─────────────────────────────────┘
              │
              ▼                              S461
┌─────────────────────────────────────────────┐
│ READ MEASURED CATHODE GAS PRESSURE, OBTAINED  │
│ ANODE GAS CIRCULATION FLOW RATE, MINIMUM       │
│ CATHODE GAS FLOW RATE AND TARGET WATER BALANCE │
└─────────────────────────────────────────────┘
              │
              ▼                  S462
┌─────────────────────────────┐
│ CALCULATE TARGET COOLING WATER │
│ TEMPERATURE ON BASIS OF READ    │
│ DATA                            │
└─────────────────────────────┘
              │
              ▼                  S463
       ╱ TARGET WATER ╲  Yes
      ⟨  BALANCE      ⟩──────┐
       ╲ ACHIEVABLE? ╱       │
              │ No           │
              ▼   S464        │
┌─────────────────────┐      │
│ MEASURE COOLING      │      │
│ WATER TEMPERATURE    │      │
└─────────────────────┘      │
              │               │
              ▼      S465       │
┌─────────────────────────────────────┐
│ CALCULATE CHANGE RATE LIMIT VALUE OF  │
│ COOLING WATER TEMPERATURE ON BASIS OF  │
│ MEASURED COOLING WATER TEMPERATURE     │
│ AND TARGET COOLING WATER TEMPERATURE   │
└─────────────────────────────────────┘
              │               │
              ▼◄──────────────┘
          ┌────────┐
          │ RETURN │
          └────────┘
```

FIG. 21

```
         ┌─────────────────────────────────┐
         │   TARGET CATHODE GAS FLOW RATE   │
         │    CALCULATING PROCESS (DRY)     │
         └─────────────────────────────────┘
                         │
                         │                          S471
                         ▼
    ┌──────────────────────────────────────────────────┐
    │  READ DETECTED CATHODE GAS PRESSURE, MEASURED COOLING │
    │  WATER TEMPERATURE, OBTAINED ANODE GAS CIRCULATION FLOW │
    │       RATE AND TARGET WATER BALANCE                │
    └──────────────────────────────────────────────────┘
                         │
                         │              S472
                         ▼
         ┌─────────────────────────────────┐
         │    CALCULATE TARGET CATHODE GAS   │
         │   FLOW RATE ON BASIS OF READ DATA │
         └─────────────────────────────────┘
                         │
                         ▼
                 ┌──────────────┐
                 │    RETURN     │
                 └──────────────┘
```

FIG. 22

```
       ┌─────────────────────────────────┐
       │   WET OPERATION CONTROL QUANTITY │
       │      CALCULATING PROCESS         │
       └─────────────────────────────────┘
                        │
                        ▼                    S51
       ┌─────────────────────────────────┐
       │   CALCULATE LOWEST CATHODE       │
       │        GAS PRESSURE              │
       └─────────────────────────────────┘
                        │
                        ▼                    S52
       ┌─────────────────────────────────┐
       │   CALCULATE MINIMUM ANODE GAS    │
       │     CIRCULATION FLOW RATE        │
       └─────────────────────────────────┘
                        │
                        ▼                    S53
       ┌─────────────────────────────────┐
       │   CALCULATE HIGHEST COOLING      │
       │       WATER TEMPERATURE          │
       └─────────────────────────────────┘
                        │
                        ▼                    S54
       ┌─────────────────────────────────┐
       │  TARGET CATHODE GAS FLOW RATE    │
       │    CALCULATING PROCESS (WET)     │
       └─────────────────────────────────┘
                        │
                        ▼                    S55
       ┌─────────────────────────────────┐
       │     TARGET COOLING WATER         │
       │  TEMPERATURE CALCULATING         │
       │        PROCESS (WET)             │
       └─────────────────────────────────┘
                        │
                        ▼                    S56
       ┌─────────────────────────────────┐
       │ TARGET ANODE GAS CIRCULATION FLOW RATE │
       │    CALCULATING PROCESS (WET)     │
       └─────────────────────────────────┘
                        │
                        ▼                    S57
       ┌─────────────────────────────────┐
       │   TARGET CATHODE GAS PRESSURE    │
       │    CALCULATING PROCESS (WET)     │
       └─────────────────────────────────┘
                        │
                        ▼
                  ┌──────────┐
                  │  RETURN  │
                  └──────────┘
```

FIG. 23

```
                    ┌─────────────────────────────────────┐
                    │  TARGET CATHODE GAS FLOW RATE        │
                    │  CALCULATING PROCESS (WET)           │
                    └─────────────────────────────────────┘
                                     │
                                     ▼
                                                        S541
    ┌──────────────────────────────────────────────────────┐
    │  READ LOWEST CATHODE GAS PRESSURE, MINIMUM ANODE       │
    │  GAS FLOW RATE, HIGHEST COOLING WATER TEMPERATURE      │
    │  AND TARGET WATER BALANCE                              │
    └──────────────────────────────────────────────────────┘
                                     │
                                     ▼
                                                        S542
    ┌──────────────────────────────────────────────────────┐
    │  CALCULATE TARGET CATHODE GAS FLOW                     │
    │  RATE ON BASIS OF READ DATA                            │
    └──────────────────────────────────────────────────────┘
                                     │
                                     ▼
                              ┌──────────────┐
                              │   RETURN     │
                              └──────────────┘
```

FIG. 24

```
        ┌──────────────────────────────────┐
        │  TARGET COOLING WATER TEMPERATURE │
        │     CALCULATING PROCESS (WET)     │
        └──────────────────────────────────┘
                        │
                        │              S551
                        ▼
        ┌──────────────────────────────────┐
        │  MEASURE CATHODE GAS FLOW RATE    │
        └──────────────────────────────────┘
                        │
                        │                        S552
                        ▼
 ┌────────────────────────────────────────────────────┐
 │  READ MEASURED CATHODE GAS FLOW RATE, LOWEST        │
 │ CATHODE GAS PRESSURE, MINIMUM ANODE GAS FLOW RATE   │
 │            AND TARGET WATER BALANCE                  │
 └────────────────────────────────────────────────────┘
                        │
                        │                    S553
                        ▼
        ┌──────────────────────────────────┐
        │  CALCULATE TARGET COOLING WATER   │
        │  TEMPERATURE ON BASIS OF READ     │
        │             DATA                  │
        └──────────────────────────────────┘
                        │
                        ▼
                  ┌───────────┐
                  │  RETURN   │
                  └───────────┘
```

FIG. 25

```
        ┌─────────────────────────────────────┐
        │  TARGET ANODE GAS CIRCULATION FLOW   │
        │      RATE CALCULATING PROCESS (WET)  │
        └─────────────────────────────────────┘
                          │
                          ▼                      S561
        ┌─────────────────────────────────────┐
        │              MEASURE                 │
        │       COOLING WATER TEMPERATURE      │
        └─────────────────────────────────────┘
                          │
                          ▼                      S562
        ┌─────────────────────────────────────┐
        │  READ MEASURED CATHODE GAS FLOW      │
        │  RATE, MEASURED COOLING WATER,       │
        │  LOWEST CATHODE GAS PRESSURE AND     │
        │         TARGET WATER BALANCE         │
        └─────────────────────────────────────┘
                          │
                          ▼                      S563
        ┌─────────────────────────────────────┐
        │     CALCULATE TARGET ANODE GAS       │
        │  CIRCULATION FLOW RATE ON BASIS OF   │
        │             READ DATA                │
        └─────────────────────────────────────┘
                          │
                          ▼                      S564
        ┌─────────────────────────────────────┐
        │         ESTIMATE ANODE GAS           │
        │       CIRCULATION FLOW RATE          │
        └─────────────────────────────────────┘
                          │
                          ▼                      S565
  ┌────────────────────────────────────────────────────┐
  │ CALCULATE CHANGE RATE LIMIT VALUE OF ANODE GAS      │
  │ CIRCULATION FLOW RATE ON BASIS OF ESTIMATED ANODE   │
  │ GAS CIRCULATION FLOW RATE AND TARGET ANODE GAS      │
  │ CIRCULATION FLOW RATE                               │
  └────────────────────────────────────────────────────┘
                          │
                          ▼
                   ┌─────────────┐
                   │   RETURN    │
                   └─────────────┘
```

FIG. 26

```
┌─────────────────────────────────────┐
│   TARGET CATHODE GAS PRESSURE        │
│   CALCULATING PROCESS (WET)          │
└─────────────────────────────────────┘
                  │
                  ▼                              S571
┌─────────────────────────────────────────────────┐
│  READ ESTIMATED ANODE GAS CIRCULATION FLOW RATE, │
│  MEASURED COOLING WATER TEMPERATURE, DETECTED    │
│  CATHODE GAS FLOW RATE AND TARGET WATER BALANCE  │
└─────────────────────────────────────────────────┘
                  │
                  ▼                        S572
         ┌──────────────────────────┐
         │  CALCULATE TARGET CATHODE GAS  │
         │  PRESSURE ON BASIS OF READ DATA │
         └──────────────────────────┘
                  │
                  ▼
            ┌──────────┐
            │  RETURN   │
            └──────────┘
```

**REFERENCES CITED IN THE DESCRIPTION**

**Patent documents cited in the description**

• JP 5104950 B